# EUROPÄISCHE PATENTSCHRIFT

(11) **EP 1 416 514 B1**
(45) Veröffentlichungstag und Bekanntmachung des Hinweises auf die Patenterteilung: **22.11.2006**
(21) Anmeldenummer: 03090369.4
(22) Anmeldetag: 28.10.2003
(51) Int. Cl.: H01J 37/317, H01J 37/00, H01J 31/00, B29C 35/00

(54) **Elektronenbestrahlungsanlage und Verfahren zur Bestrahlung von rohr- bzw. stangenförmigen Gegenständen**
Electron beam irradiation device and process for irradiation of tubular or elongated products
Appareil d'irradiation par électrons et procédé pour l'irradiation des articles tubulaires ou en forme de barres

(30) Priorität: 28.10.2002 DE 10250988
(43) Veröffentlichungstag der Anmeldung: 06.05.2004
(73) Patentinhaber: GAMMA-Service Produktbestrahlung GmbH, 01454 Radeberg (DE)
(72) Erfinder: Hübner, Gerhard, Dr. habil., 00451 Panitzsch (DE); Zeising, Manfred, Dipl.-Ing., 06116 Halle (DE)
(74) Vertreter: Hengelhaupt, Jürgen

(56) Entgegenhaltungen:
- WO-A-98/50939
- WO-A-99/52650
- DE-A- 3 019 728
- GB-A- 809 183
- US-A- 4 484 341
- US-A- 4 689 488
- US-A- 5 636 257
- HEGER, A: "Technologie der Strahlenchemie von Polymeren" 1990 , CARL-HANSER-VERLAG , MÜNCHEN XP002265967 * Seite 114 - Seite 122 *

## Beschreibung

Die Erfindung betrifft eine Elektronenbestrahlungsanlage mit den im Oberbegriff des Anspruches 1 sowie ein Verfahren zur Bestrahlung von Gegenständen in einer Elektronenbestrahlungsanlage mit den im Oberbegriff des Anspruchs 28 genannten Merkmalen.

Aus einer Veröffentlichung Heger, A. "Technologie der Strahlenchemie von Polymeren" (Karl-Hanser-Verlag) (XP 002265967) werden Elektronenbeschleunigungssysteme beschrieben, die mit Scannersystemen der verschiedensten Ausführungen ausgebildet sind.
Die WO 99/52650 beschreibt ein Verfahren bzw. eine Einrichtung zur Elektronenbestrahlung von Objekten mittels einer Bestrahlungseinheit mit einem Strahlenaustrittsfenster. Als Bestrahlungsanlage zur Durchführung dieses Verfahrens dient eine roboterartige Einrichtung, die das zu bestrahlende Objekt in einem vorgebbaren Abstand zum Strahlenaustrittsfenster fixiert und entsprechend bestrahlt.
Die WO 98/50939 zeigt eine Vorrichtung und ein Verfahren mittels der Gegenstände, die auf einem Förderband in eine Strahlenanlage geführt werden, in einem Strahlenbereich dieser Bestrahlungsanlage in einem vorgebbaren Abstand geführt werden.

Das europäische Patent EP 0 165 118 beschreibt eine Anlage zur Polymerisation/Vernetzung von Gegenständen vor allem für die Behandlung von langgestreckten, rotationssymmetrischen Teilen, wie zum Beispiel Rohren.

Das Dokument beschreibt diese Anlage zur Polymerisation/Vernetzung, die Mittel zum Erzeugen eines Elektronenstrahls, Mittel zum Lenken des Elektronenstrahls auf das zu bearbeitende Teil, ein Target, das unter der Wirkung des Elektronenstrahls eine Röntgenstrahlung erzeugen kann, Mittel zur Anordnung des Targets in der Bahn der Elektronen oder außerhalb derselben, um das Teil mit einer Röntgenstrahlung bzw. einer Elektronenstrahlung zu bestrahlen, sowie Mittel zum Ausführen einer Relativbewegung zwischen dem bestrahlenden Strahl und dem Teil, damit dieses ganz oder teilweise der Wirkung einer der Strahlungen unterworfen wird. Die betreffende Relativbewegung besteht aus einer Verschiebung des Teils bzw. Gegenstandes längs seiner Achse, die horizontal und zur Achse des bestrahlenden Strahls senkrecht ist, kombiniert mit einer Drehung des Teils bzw. Gegenstandes um seine Achse. Inhalt der Druckschrift ist ferner, die Darstellung zweier Wirkungsweisen. Das Teil wird zum einen in der Weise angeordnet, dass es an das Target angenähert oder von diesem entfernt werden kann, oder zum anderen die Achse des Teils festgehalten wird und das Target in Richtung des Gegenstandes verschoben wird.

Die Druckschrift EP 0 715 936 beschreibt eine Weiterentwicklung der Bestrahlungsvorrichtung des europäischen Patentes EP 0 165 118, indem sie sie vervollkommnet, um sie für die Behandlung insbesondere von rotationssymmetrischen Teilen mit großen Abmessungen und mit Abschnitten aus Verbundwerkstoffen, die sich in einem sehr großen Entfernungsbereich in Bezug auf die Achse des Teils befinden, geeignet zu machen. Hierzu umfasst die Vorrichtung einen Elektronengenerator, der in einem abgeschirmten Raum angeordnet ist und einen Linearbeschleuniger umfasst, der mit einem Horn mit einem Bestrahlungsfenster und mit Mitteln zum Benutzen des Beschleunigers versehen ist. Ein Target zur Umwandlung des Elektronenstrahls in Röntgenstrahlung, das derart einziehbar montiert ist, das in den Austrittsstrahl des Horns eingeschaltet ist oder nicht sowie eine Bestrahlungszelle, die die zu behandelnde Struktur (den Gegenstand) enthält, und Mittel zum Tragen und Präsentieren der Struktur gegenüber dem Elektronenstrahl oder der Röntgenstrahlung gehören ferner zur erfindungsgemäßen Anlage, die dadurch gekennzeichnet ist, dass die Gesamtheit aus Beschleuniger, Horn, Target und wenigstens einem Teil der Mittel zum Benutzen auf einer in dem abgeschirmten Raum in Richtung der Bestrahlungszelle und entsprechend einer horizontalen, parallel zur Achse des von dem Beschleuniger erzeugten Strahls befindlichen Achse beweglichen Plattform angeordnet ist. Die so gebildete bewegliche Ausrüstung ist an ihrer gegen die Bestrahlungszelle gerichteten Stirnseite mit einem Strahlenschutzschild versehen. Der Strahlenschutzschild kann in einem Durchgang verschoben werden, der in einer Trennwand zwischen der Bestrahlungszelle und dem abgeschirmten Raum angebracht ist, wobei der Rand des Strahlenschutzschildes an den Querschnitt des Durchgangs derart angepasst ist, dass zwischen dem Rand und dem Durchgang nur ein Spiel verbleibt, das so klein wie möglich ist.

Nachteilig bei den Anlagen, die aus dem Stand der Technik bekannt sind, ist, dass jeweils nur ein Gegenstand/Produkt in einer Achse zum Bestrahlungsfenster bestrahlt wird. Zudem sind die Mittel zum Zuführen und Abführen in einen Bestrahlungsraum nicht dazu geeignet, besonders große Gegenstände/Produkte in den Bestrahlungsraum zu transportieren. Ferner sind die Möglichkeiten der Verstellung des Produktes im Augenblick der Bestrahlung beschränkt.

Es ist deshalb die Aufgabe der vorliegenden Erfindung, eine Vorrichtung zur Bestrahlung von Gegenständen/Produkten zu schaffen, mittels der mindestens ein Gegenstand beziehungsweise ein Produkt entsprechend seiner geometrischen Form, insbesondere rotationssymmetrische Teile mit großen Abmessungen und/oder flexible Rohre großer Länge und/oder Stückgüter mit großen Abmessungen, optimal in eine günstige Bestrahlungslage bringbar sind und mehrere Gegenstände/Produkte zudem alternativ zur gleichen Zeit bestrahlbar sind.

Die Aufgabe der Erfindung ist es ferner, ein Verfahren anzugeben, mit dem der Gegenstand beziehungsweise das jeweilige Produkt einzeln oder gemeinsam mit anderen Gegenständen oder Produkten der Vorrichtung zugeführt, bestrahlt und abgeführt wird.

Erfindungsgemäß wird diese Aufgabe in Verbindung mit den Merkmalen des Oberbegriffs des Patentanspruchs 1 durch die in den Ansprüchen 1 und 28 im kennzeichnenden Teil genannten Merkmale gelöst. Dadurch, dass ein Strahlenbereich, der beabstandet zu einer Scannereinrichtung in mindestens zwei Ebenen ausgebildet ist und in der je Ebene mindestens eine Transporteinrichtung angeordnet ist, mittels der wahlweise ein stangen-/rohrförmiger Gegenstand und/oder weitere Gegenstände in die Elektronenbestrahlungsanlage bringbar und gemeinsam oder getrennt bestrahlbar sind, wird vorteilhaft erreicht, dass mindestens ein Gegenstand bzw. ein Produkt entsprechend seiner geometrischen Form, insbesondere rotationssymmetrische Teile mit großen Abmessungen und/oder weitere Gegenstände mit großen Abmessungen, optimal in die Bestrahlungslage bringbar sind und in mindestens zwei Ebenen gemeinsam oder getrennt bestrahlbar sind.

Erfindungsgemäß wird die Aufgabe durch ein Verfahren gelöst, dadurch dass wahlweise mindestens ein stangen-/rohrförmiger Gegenstand und/oder weitere Gegenstände in mindestens zwei Ebenen der Elektronenbestrahlungsanlage zugeführt, den Ebenen der Strahlenbereiche zugeordnet und ein stangen-/rohrförmiger Gegenstand und/oder weitere Gegenstände gemeinsam oder getrennt bestrahlt werden.

In bevorzugter Ausgestaltung der Erfindung ist vorgesehen, dass der mindestens eine Strahlenbereich an mindestens einem Strahlenaustrittsfenster in mindestens zwei von der Sannereinrichtung beabstandeten Ebene in einer x-Richtung durch einen Scann-Magneten und in einer y-Richtung durch einen Wobbler ausgebildet ist. Vorzugsweise ist vorgesehen, dass der mindestens eine Strahlenbereich in der beabstandeten Ebene durch einen Fokussierungsmagneten der Scannereinrichtung in x-Richtung abweichend zu dem Strahlenaustrittsfenster eingestellt ist. In bevorzugter Ausgestaltung der Erfindung ist die Scannereinrichtung mindestens ein erster Scan-Horn mit einem ersten Strahlenaustrittsfenster und ein zweites Scan-Horn mit einem zweiten Strahlenaustrittsfenster. Dabei bildet das erste Strahlenaustrittsfenster und das zweite Strahlenaustrittsfenster gemeinsam einen Strahlenbereich sowohl am Strahlenaustrittsfenster selbst als auch in der beabstandeten Ebene.

In bevorzugter Ausgestaltung der Erfindung ist der mindestens eine stangen-/rohrförmige Gegenstand parallel zur x-Richtung auf einer x-Scan-Achse mittels einer Stangen-/Rohr-Transporteinrichtung in eine zweite Ebene in den Strahlenbereich in die Bestrahlungslage bringbar. Es ist möglich, stangen-/rohrförmige Gegenstände mit kleinerem Durchmesser in Hilfswandungen, beispielsweise Papphülsen oder dünnwandigen PE-Rohren, zu bündeln und derart gebündelt zu transportieren. In bevorzugter Weise umfasst die Stangen-/Rohr-Transporteinrichtung eine zweite Zuführungseinrichtung, eine zweite Bestrahltransporteinrichtung und eine zweite Abtransporteinrichtung. Die zweite Zuführungseinrichtung für den stangen-/rohrförmigen Gegenstand umfasst einen Eingangsspeicher, einen Eingangs-Einzelnförderer, eine erste Absenkbahn und eine Einlegebahn bis zu einer Vorzone. Die zweite Bestrahltransporteinrichtung für den stangen-/rohrförmigen Gegenstand ist als eine Stangenbestrahlungsstrecke ausgebildet. Die zweite Abtransporteinrichtung für den stangen-/rohrförmigen Gegenstand umfasst eine Wechselbahn, eine zweite Absenkbahn, eine Rückrollbahn, eine Hebebahn, einen Ausgangs-Einzelförderer und einen Ausgangsspeicher.

Die erfindungsgemäße Stangenbestrahlungsstrecke erstreckt sich zwischen einer Vorzone und einer Nachzone mit einem dazwischen liegenden Bestrahlungsraum. Die Stangenbestrahlungsstrecke umfasst mindestens eine Stangentransportstation. Die Stangentransportstation ist vorzugsweise parallel zu der x-Scan-Achse mindestens eines Scan-Horns angeordnet. Die Stangentransportstation weist mindestens ein Ständerwerk und mindestens einen Haltearm auf. In bevorzugter Ausgestaltung ist in der Stangentransportstation eine Rotationsvorrichtung, eine Translationsvorrichtung, eine vertikale Verstellvorrichtung und eine horizontale Verstellvorrichtung verwirklicht. Die Rotationsvorrichtung, die Translationsvorrichtung und die vertikale Verstellvorrichtung sind dabei bevorzugt mittels Allseitenrollen ausgeführt.

In weiterer bevorzugter Ausgestaltung der Erfindung ist mindestens ein flexibles Rohr parallel zur x-Richtung auf der x-Scan-Achse oder senkrecht zur x-Richtung in einer y-Scan-Achse mittels einer Rohrtransporteinrichtung in eine erste Ebene in die Bestrahlungslage bringbar. Die Stangen-/Rohr-Transporteinrichtung für ein flexibles Rohr umfasst mindestens eine erste Zuführungseinrichtung, mindestens eine erste Bestrahltransporteinrichtung in der ersten Ebene und mindestens eine erste Abtransporteinrichtung. Die erste Zuführungseinrichtung und die erste Abtransporteinrichtung umfasst vorzugsweise ein erstes und zweites Wickelaggregat. Die erste Bestrahlungseinrichtung umfasst im Bereich der ersten Ebene Führungsrollen und Umlenkrollen.

Ferner bevorzugt ist, dass mindestens ein Stückgut senkrecht zur x-Richtung in einer y-Scan-Achse mittels einer Stückguttransporteinrichtung in eine dritte Ebene in die Bestrahlungslage bringbar ist. Die Stückguttransporteinrichtung für ein Stückgut umfasst mindestens eine dritte Zuführungseinrichtung, mindestens eine dritte Bestrahltransporteinrichtung in der dritten Ebene und mindestens eine dritte Abtransporteinrichtung. Die mindestens eine dritte Zuführungseinrichtung, die mindestens eine dritte Bestrahltransporteinrichtung und die mindestens eine dritte Abtransporteinrichtung sind vorzugsweise Fördereinrichtungen als Kombination aus Kettenförderern und Rollenförderern.

In bevorzugter Ausgestaltung der Erfindung ist jeder Transporteinrichtung für stangen-/rohrförmige Gegenstände, für flexible Rohre und Stückgüter jeweils ein Labyrinth zugeordnet.

In bevorzugter Ausführung der Erfindung wird das Verfahren zur Bestrahlung des mindestens einen stangen-/rohrförmigen Gegenstandes in einem zweiten Labyrinth durchgeführt. Bevorzugt ist, dass der stangen-/rohrförmige Gegenstand in einem Eingangsspeicher gespeichert und mittels einem Eingangs-Einzelförderer vereinzelt und mittels einer ersten Absenkbahn in eine zweite Ebene abgesenkt und mittels einer Einlegebahn in eine Vorzone transportiert und von einer Bestrahltransporteinrichtung von der Vorzone entlang einer x-Scan-Achse parallel zu einer x-Richtung durch den Strahlenbereich in eine Nachzone transportiert und von der Nachzone von einer Wechselbahn übernommen und zu einer zweiten Absenkbahn transportiert und mittels der zweiten Absenkbahn abgesenkt und mittels einer Rückrollbahn zu einer Hebebahn gerollt und mittels der Hebebahn angehoben und von einem Ausgangs-Einzelförderer zu einem Ausgangsspeicher transportiert und in dem Ausgangsspeicher gespeichert wird.

Das erfindungsgemäße Verfahren ermöglicht zudem, dass der mindestens eine stangen-/rohrförmige Gegenstand mittels der Bestrahltransporteinrichtung von der Vorzone entlang einer x-Scan-Achse parallel zu einer x-Richtung in eine Nachzone transportiert und innerhalb der Bestrahltransporteinrichtung gleichzeitig mittels einer Rotationsvorrichtung um seine eigene Achse rotiert und/oder vertikal mittels einer vertikalen Verstellvorrichtung innerhalb einer ersten und der zweiten Ebene verstellt und/oder horizontal mittels einer horizontalen Verstellvorrichtung aus der x-Scan-Achse heraus innerhalb der ersten oder zweite Ebene verstellt wird.

Erfindungsgemäß wird das Verfahren ferner durchgeführt, indem mindestens ein flexibles Rohr durch ein erstes Labyrinth mittels eines ersten Wickelaggregates abgewickelt und von einer ersten Bestrahltransporteinrichtung parallel zur x-Richtung auf der x-Scan-Achse oder senkrecht zur x-Richtung in einer y-Scan-Achse durch den Strahlenbereich mittels Umlenkungs- und Führungsrollen transportiert und mittels eines zweiten Wickelaggregates aufgewickelt wird.

Erfindungsgemäß wird ein Stückgut durch ein drittes Labyrinth mittels mindestens einer ersten Fördereinrichtung transportiert und von einer dritten Bestrahltransporteinrichtung senkrecht zur x-Richtung auf der y-Scan-Achse mittels mindestens einer zweiten Fördereinrichtung durch den Strahlenbereich transportiert und mittels mindestens einer dritten Fördereinrichtung abtransportiert. In bevorzugter Ausgestaltung wird das Stückgut auf der ersten oder dritten Fördereinrichtung beim Zu- oder Abtransport mittels einer Wendestation gewendet.

In weiterer bevorzugter Ausgestaltung der Erfindung wird gleichzeitig flexibles Rohr und stangen-/rohrförmige Gegenstände in der ersten und zweiten Ebene im Strahlenbereich in seine Bestrahlungslage bestrahlt. Ferner besteht die Möglichkeit, gleichzeitig flexibles Rohr und Stückgut in der ersten und dritten Ebene im Strahlenbereich in der jeweiligen Bestrahlungslage zu bestrahlen.

Die erfindungsgemäße Vorrichtung und das zugehörige Verfahren bieten folgende Vorteile:

Die Transporteinrichtungen für stangen-/rohrförmige Gegenstände, flexible Rohre und Stückgüter sind in jeweils einer Ebene - insgesamt also mindestens drei Ebenen - angeordnet. In Abhängigkeit des Gegenstandes/Produktes ist eine Bestrahlung in Längsrichtung parallel zur x-Achse oder in y-Richtung senkrecht zur x-Achse mindestens eines Scan-Horns möglich.

Von besonderer Bedeutung und von besonderem Vorteil ist es dabei, dass zwei Gegenstände/Produkte parallel bestrahlt werden können.

Ferner ist durch Ausbildung der Scannereinrichtung in ein erstes und ein zweites Scan-Horn mit unterschiedlichen Energien jeweils ohne mechanischen Umbau die Bestrahlung der Gegenstände/Produkte in zwei Energiebereichen möglich. Die Vorrichtung ist dazu derart ausgebildet, dass in den drei Ebenen stets das erste oder das zweite Scan-Horn mit seinem zugehörigen Austrittsfenster und dem zugehörigen Strahlenbereich zur Bestrahlung wählbar ist und somit für alle Produkte/Gegenstände zur Verfügung steht.

In vorteilhafter Weise entsteht dadurch eine multivalente Nutzungsmöglichkeit der Elektronenbestrahlungsanlage für Stückgut, Rohre, Stangen, flexible Rohre und Kabel, ohne dass Umbauarbeiten notwendig sind.

Zu den weiteren technologischen Einrichtungen gehören in bevorzugter Weise weitere Systeme zur Qualitätssicherung, zur Logistik, zur Anlagenversorgung (Druckluft-, Elektro- und Automatisierungsanlagen, Kühlung, Lüftung, Absaugung, etc.) sowie technologische Einrichtungen zur Personen- und Anlagensicherheit.

Die gesamte Anlage wird in bevorzugter Weise mit einer speicherprogrammierbaren Steuerung gesteuert.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: einen schematischen Aufbau einer Elektronenbestrahlungsanlage nach dem Stand der Technik;
- Figur 2: ein bekanntes Scan-Horn - dessen Strahlungsbereich und die Bewegungsrichtungen für die Gegenstände/Produkte im Strahlenbereich;
- Figur 3: eine schematisch verfeinerte Darstellung des Aufbaus der Elektronenbestrahlungsanlage;
- Figur 4: ein Vertikallabyrinth für einen stangen-/rohrförmigen Gegenstand;
- Figur 5A: eine Stangentransportstation einer Stangebestrahlungsstrecke mit stangen-/rohrförmigen Gegenständen in einer x-Scan-Achse;
- Figur 5B: die Stangentransportstation der Stangenbestrahlungsstrecke mit einer Vertikalverschiebung der stangen-/rohrförmigen Gegenstände aus der x-Scan-Achse;
- Figur 5C: die Stangentransportstation der Stangenbestrahlungsstrecke des stangen-/rohrförmigen Gegenstandes auf der x-Scan-Achse mit einem großen Durchmesser;
- Figur 6: eine Allseitenrolle;
- Figur 7: ein Horizontallabyrinth für ein Stückgut und
- Figur 8: eine schematische Ansicht eines Stückgutes unterhalb einer Scannereinrichtung.

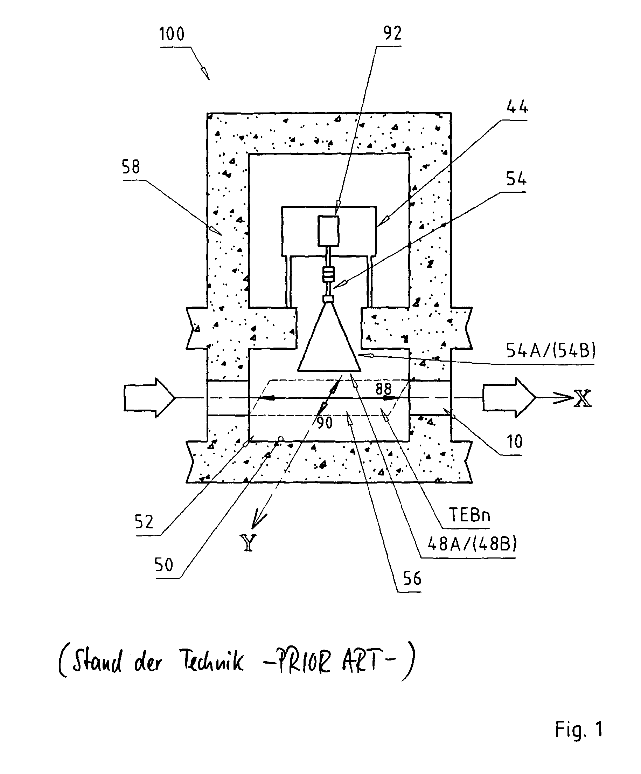

Eine Elektronenbestrahlungsanlage hat folgende Anwendungsbereiche wie bsp. Strahlenvernetzung von Polymeren, strahlenchemischer Abbau von Polymeren, Modifizierung von Festkörpern, Keimzahlreduzierung ausgewählter Produkte und Sterilisation von Medizinprodukten und Verpackungsmaterialien. Elektronenbestrahlungsanlagen mit diesen Anwendungsbereichen sind prinzipiell ähnlich aufgebaut. Sie bestehen aus einem Elektronenbeschleuniger unterschiedlicher Bauart, aus einem oder mehreren Materialzu- und - abführsystemen, aus Abschirmungssystemen zum Schutz vor Strahlung sowie aus primären und sekundären Versorgungs- und Sicherungssystemen. Der grundsätzliche Aufbau einer bekannten Bestrahlungsanlage ist in Figur 1 dargestellt.

Fig. 1 zeigt den prinzipiellen Aufbau einer Elektronenbestrahlungsanlage 100, in der als Elektronenbeschleuniger 92 ein Teilchenbeschleuniger, vorzugsweise vom Typ Rhodotron, einsetzbar ist. Die Beschleunigungsstrecken des Elektronenbeschleunigers 92 befinden sich in einem koaxial geformten Resonator, in dem ein Vakuum von 10⁻⁶ Torr herrscht. Die HF-Spannung wird von einem mehrstufigen HF-Generator erzeugt und der Leistungsröhre am Resonatoroberteil über ein Hochspannungskabel zugeführt. Das HF-Feld wird mit einer Leistung von vorzugsweise zirka 160 kW eingekoppelt.

Eine Elektronenkanone liefert einen mittleren Strom von 10 mA, der in den Resonator mit geringer Energie, vorzugsweise 50 keV, eingeschossen wird. Durch das angelegte HF-Feld mit einer Frequenz von vorzugsweise 107,5 MHz werden die Elektronen in 20 Schritten auf eine maximale Energie von 10 MeV beschleunigt. Nach jeweils zwei Beschleunigungsschritten erfolgt eine Umlenkung um 198°. Daraus resultiert eine maximal mögliche Strahlleistung von 80 kW bei einer Energie von 10 MeV bzw. von maximal 75 kW bei einer Energie von 3 MeV.

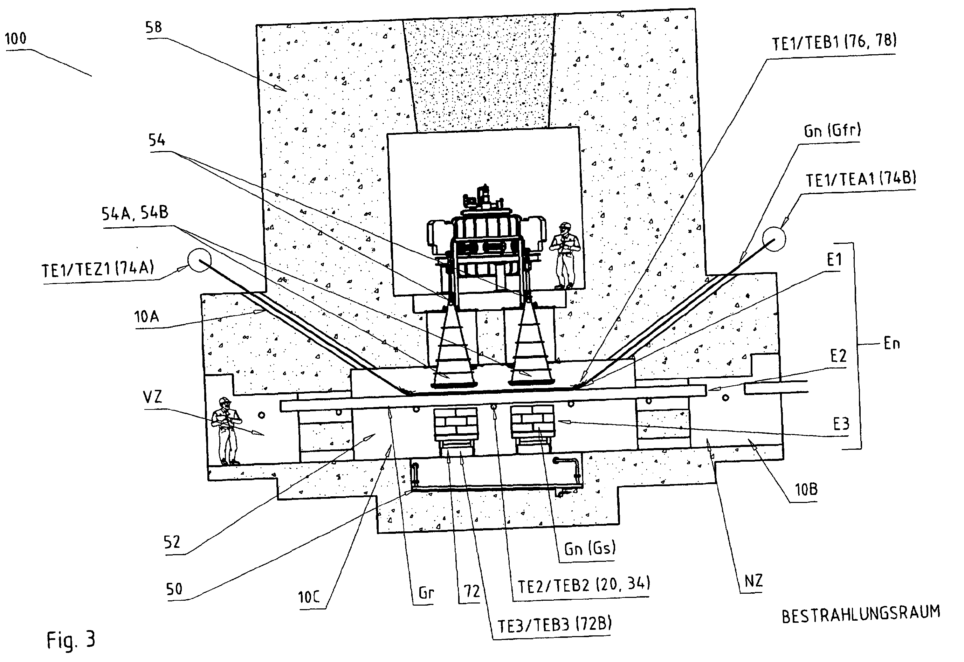

Der Elektronenstrahl kann mit zwei Energien aus dem Resonator herausgeführt werden. Für jede der beiden Elektronenergien ist ein getrenntes Strahlführungssystem vorhanden, in dem jeweils ein vorzugsweise 270°-Umlenkmagnet den Elektronenstrahl in die vertikale Richtung bringt. Zur Ausbildung eines Strahlenbereiches 56 dient eine Scannereinrichtung 54, wobei ein Wobbler für eine Verbreiterung des Strahlenbereiches 56 auf vorzugsweise 60 mm in einer y-Richtung y sorgt und ein Scan-Magnet eine Längsaufweitung in einer x-Richtung x des Strahlenbereiches 56 auf vorzugsweise 1200 mm an einem ersten Strahlenaustrittsfenster 48A sorgt. Am Strahlenaustrittsfenster 48 der Scannereinrichtung 54 bzw. eines ersten Scan-Horns 54A sorgt ein zusätzlicher Fokussierungsmagnet dafür, dass am Ort des zu bestrahlenden Produktes unterschiedliche Scan-Breiten eingestellt werden können, wodurch der Strahlenbereich 56 in x-Richtung x verändert wird, wobei die Scan-Breite am Strahlenaustrittsfenster 48 mit vorzugsweise 1.200 mm erhalten bleibt. Eine spezielle Betriebsart der Fokussierungsmagnete ist der Parallelstrahl. Das Strahlenaustrittsfenster 48 aus Titanfolie (Dicke ca. 50 µm) ist luftgekühlt. Der Elektronenstrahl tritt in die Atmosphäre ein und kann dort zur Produktbestrahlung eingesetzt werden. Es ist damit zu rechnen, dass nicht alle Elektronen auf das zu bestrahlende Produkt treffen und sich weiter in Richtung Boden bewegen. Aus diesem Grund ist zur Strahlenvernichtung unterhalb der Fußbodenoberkante eine wassergekühlte Strahlenfalle 50 in einem Bestrahlungsraum 52 vorgesehen. Die Scannereinrichtung 54 ist mittels dem ersten Scan-Horn 45A und einem zweiten Scan-Horn 54B ausführbar, worauf in Figur 3 noch näher eingegangen wird. In diesem Fall bildet sich am ersten Scan-Horn 54A das erste Strahlenaustrittsfenster 48A und ein zweites Strahlenaustrittsfenster 48B aus, die gemeinsam den Strahlenbereich 56 bilden können. Andererseits ist das erste Scan-Horn 54A mit einer Strahlleistungsenergie von 10 MeV und das zweite Scan-Horn 54B mit einer Strahlleistungsenergie von 3 MeV ausstattbar.

Figur 1 zeigt ferner, dass unterhalb des ersten Scan-Horns 54A, 54B im Strahlenbereich 56 ein Bereich zur Gegenstand-/-Produktführung in x-Richtung x auf einer x-Scan-Achse 88 und in y-Richtung y auf einer y-Scan-Achse 90 nutzbar ist. Im Strahlenbereich 56 sind in verschiedenen Ebenen Bestrahltransporteinrichtung TEBₙ ausgebildet, mittels denen die Gegenstände/Produkte in eine Bestrahlungslage gebracht werden.

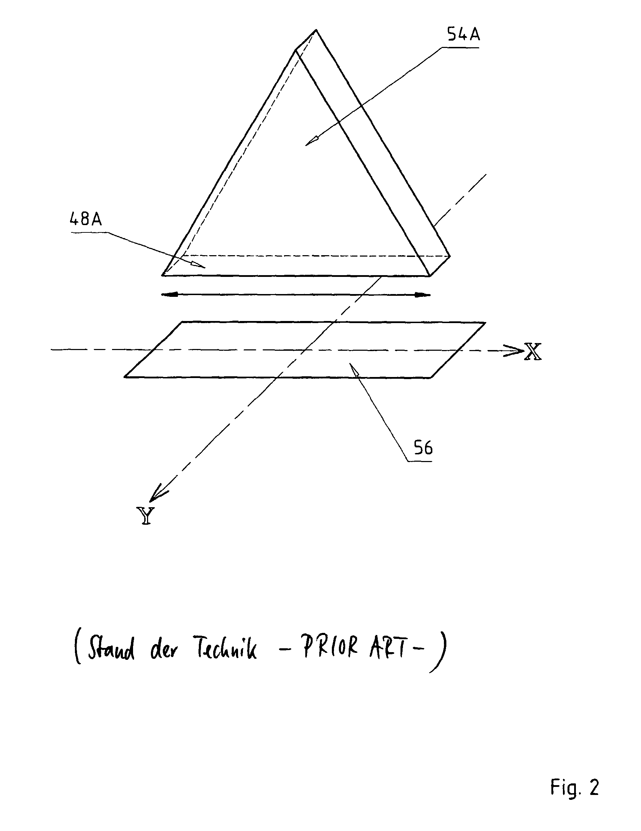

Die gesamte Elektronenbestrahlanlage 100 weist eine Abschirmung 58 auf und wird von einer Steuerung 44 gesteuert. Figur 2 zeigt in Verbindung mit Figur 1 ein bekanntes Scan-Horn 54A mit dem Strahlenaustrittsfenster 48A und dem Strahlenbereich 56 und den möglichen Transportrichtungen der Gegenstände in x-Richtung x parallel zum ersten Scan-Horn 54A und in y-Richtung y senkrecht zum ersten Scan-Horn 54A.

Figur 3 zeigt die Elektronenbestrahlungsanlage 100 in einer detaillierteren schematischen Ansicht. Figur 3 zeigt die Abschirmung 58, das erste Scan-Horn 54A und das zweite Scan-Horn 54B unterhalb der Scannereinrichtung 54. Sichtbar wird zudem der Bestrahlungsraum 52 und die Strahlenfalle 50. Die Figur 3 zeigt andeutungsweise die Gegenstände in ihrer Bestrahlungslage in den Ebenen Eₙ. Dargestellt ist in einer ersten Ebene E₁ ein Gegenstand G_{fr} ein flexibles Rohr. In einer zweiten Ebene E₂ ist ein stangen-/rohrförmiger Gegenstand Gᵣ dargestellt. Kleinere Rohre oder Stangen mit einem Durchmesser unter 60 mm können in Papphülsen oder dünnwandigen PE-Rohren gebündelt und derart der Bestrahlung zugeführt werden. Hierdurch wird ein für den Transportprozess nachteiliges Durchbiegen der einzelnen dünnen Rohre oder Stangen vermieden. In einer dritten Ebene E₃ zeigt Figur 1 einen Gegenstand als ein Stückgut Gₛ, der unter dem ersten Scan-Horn 54A oder dem zweiten Scan-Horn 54B in die Bestrahlungslage bringbar ist.

Zu dem flexiblen Rohr G_{fr} gehört ein erstes Labyrinth 10A und eine Rohrtransporteinrichtung TE₁, die aus einer ersten Zuführungseinrichtung TEZ₁, einer ersten Bestrahltransporteinrichtung TEB₁, und einer ersten Abtransporteinrichtung TEA₁ ausgebildet ist. Die erste Zuführungseinrichtung TEZ₁ ist als ein erstes Wickelaggregat 74A und die erste Abtransporteinrichtung TEA₁ ist als ein zweites Wickelaggregat 74B ausgebildet. Die Wickelaggregate 74 dienen zum Abwickeln bzw. Aufwickeln der flexiblen Rohre G_{fr}, während sich im Bestrahlungsraum 52 als erste Bestrahltransporteinrichtung TEB₁ Führungsrollen 76 und Umlenkrollen 87 befinden. Durch die Rohrtransporteinrichtung TE₁ besteht grundsätzlich die Möglichkeit, das flexible Rohr G_{fr} parallel zur x-Richtung x auf der x-Scan-Achse 88 in die erste Ebene E₁ in Bestrahlungslage zu bringen. In Figur 3 und auch in den weiteren Figuren nicht dargestellt ist die Möglichkeit, dass das flexible Rohr G_{fr} ebenfalls senkrecht zur x-Richtung x in die y-Scan-Achse 90 mittels der Rohrtransporteinrichtung TE₁ in die erste Ebene E₁ in Bestrahlungslage bringbar ist.

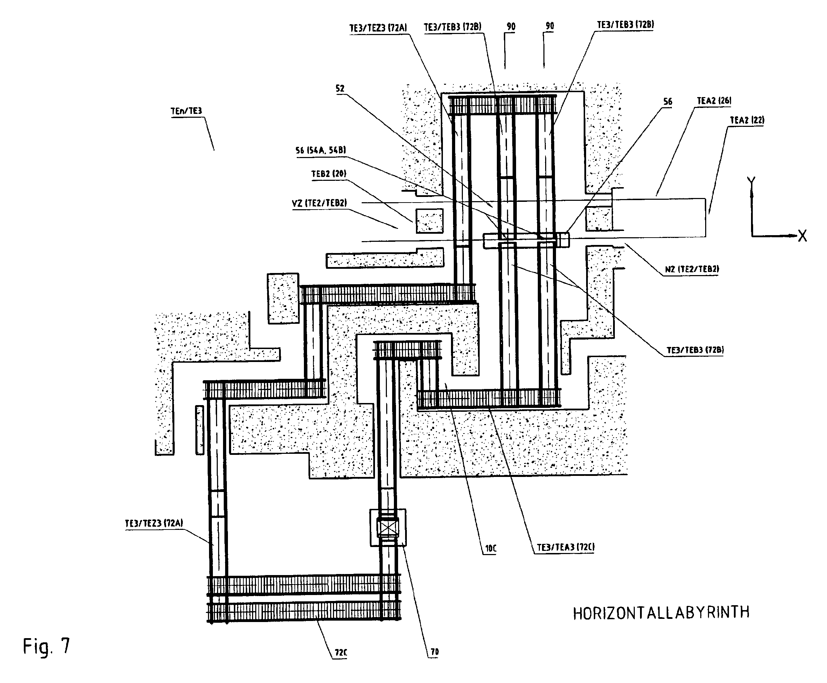

Figur 3 zeigt ferner eine Stangen-/Rohr-Transporteinrichtung TE₂ - dabei jedoch in Figur 3 nur eine zweite Bestrahltransporteinrichtung TEB₂ in einem zweiten Labyrinth 10B, dem so genannten Vertikallabyrinth. Die zweite Bestrahltransporteinrichtung TEB₂ besteht im Detail aus einer Stangenbestrahlungsstrecke 20 und die Stangenbestrahlungsstrecke 20 wiederum aus mehreren Stangentransportstationen 34, auf die in Figur 5A bis 5C noch näher eingegangen wird. Zu dem zweiten Labyrinth 10B gehört eine Vorzone VZ und eine Nachzone NZ, die den Bestrahlungsraum 52 vom weiteren Vertikallabyrinth 10B trennt, wobei aus Richtung der Vorzone VZ eine zweite Zuführungseinrichtung TEZ₂ für den stangen-/rohrförmigen Gegenstand Gᵣ ausgebildet ist (in Figur 3 nicht sichtbar) und in der Nachzone NZ eine zweite Abtransporteinrichtung TA₂ zum Abtransport des stangen-/rohrförmigen Gegenstandes Gᵣ (in Figur 3 nicht sichtbar) beginnt. In der dritten Ebene E₃ ist eine dritte Transporteinrichtung, eine Stückguttransporteinrichtung TE₃, angeordnet. In Figur 3 ist der Teil der Stückguttransporteinrichtung TE₃ sichtbar, in dem die Bestrahlung des Stückgutes Gₛ in der dritten Ebene E₃ auf einer dritten Fördereinrichtung 72C erfolgt. Eine weitere Beschreibung der Stückguttransporteinrichtung TE₃ erfolgt in Figur 7. Die Stückguttransporteinrichtung TE₃ wird durch ein drittes Labyrinth 10C geführt, welches ebenfalls in Figur 7 näher dargestellt ist.

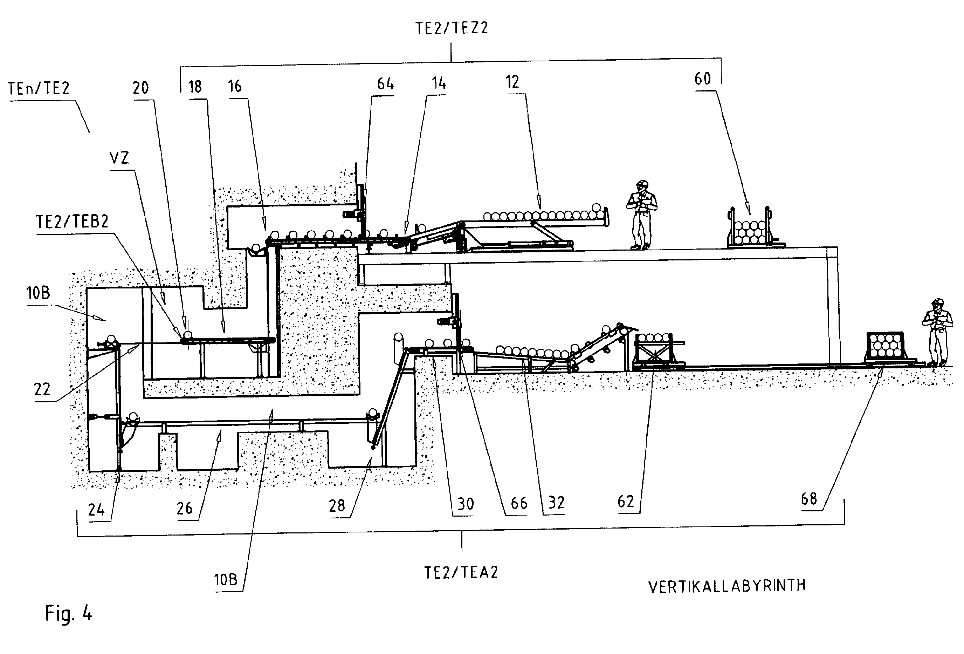

Figur 4 zeigt die Stangen-/Rohr-Transporteinrichtung TE₂ im zweiten Labyrinth 10B, dem Vertikallabyrinth. Die zweite Stangen-/Rohr-Transporteinrichtung TE₂ besteht aus der zweiten Zuführungseinrichtung TEZ₂ der zweiten Bestrahltransporteinrichtung TEB₂ (in Figur 4 nicht sichtbar) und einer zweiten Abtransporteinrichtung TA₂.

Im Folgenden wird die Vorrichtung gemeinsam mit dem zugehörigen Verfahren zur Bestrahlung von stangen-/rohrförmigen Gegenständen Gᵣ beschrieben. Gemäß der Aufgabe des erfindungsgemäßen Verfahrens bzw. der erfindungsgemäßen Vorrichtung ist es Ziel, die stangen-/rohrförmigen Gegenstände Gᵣ durch das zweite Labyrinth 10B in die zweite Ebene E₂ in den Strahlenbereich 56 zu führen.

Der stangen-/rohrförmige Gegenstand Gᵣ wird in einer ersten Station einer Entpackung 60 zugeführt. Anschließend wird der Gegenstand Gᵣ in einem Eingangsspeicher 12 gespeichert und mittels einem Eingangs-Einzelförderer 14 vereinzelt, wobei im Bereich des Eingangs-Einzelförderers 14 ein hermetisches Eingangstor 64 angeordnet ist. Nach der Vereinzelung erfolgt mittels einer ersten Absenkbahn 16 ein Absenken des Gegenstandes Gᵣ in die zweite Ebene E₂ und mittels einer Einlegebahn 18 in die Vorzone VZ ist der Transport innerhalb der zweiten Zuführungseinrichtung TEZ₂ abgeschlossen.

Anschließend erfolgt mittels der zweiten Bestrahltransporteinrichtung TEB₂ von der Vorzone VZ entlang der x-Scan-Achse 88 parallel zu der x-Richtung x im Strahlenbereich 56 die Bestrahlung des Gegenstandes Gᵣ in seiner Bestrahlungslage und der Weitertransport bis zu der Nachzone NZ. Dieser Bereich ist in Figur 4 nicht dargestellt, weshalb darauf in anderen Figuren eingegangen wird.

Nach dem Transport des Gegenstandes Gᵣ in die Nachzone NZ erfolgt die Übernahme von einer Wechselbahn 24 aus der Nachzone NZ zu einer zweiten Absenkbahn 24, die den Gegenstand Gᵣ ein weiteres Mal absenkt, wonach mittels einer Rückrollbahn 26 der Gegenstand Gᵣ zu einer Hebebahn 28 gerollt und mittels Hebebahn 28 angehoben und von einem Ausgangs-Einzelförderer 30 zu einem Ausgangsspeicher 32 transportiert und in dem Ausgangsspeicher 32 gespeichert wird. Der Gegenstand Gᵣ passiert im Bereich des Ausgangs-Einzelförderers 30 ein Ausgangstor 66, welches das zweite Labyrinth 10B von der Umgebung abriegelt. Anschließend erfolgt eine Verpackung 62 und ein Abtransport 68 der stangen-/rohrförmigen Gegenstände Gᵣ.

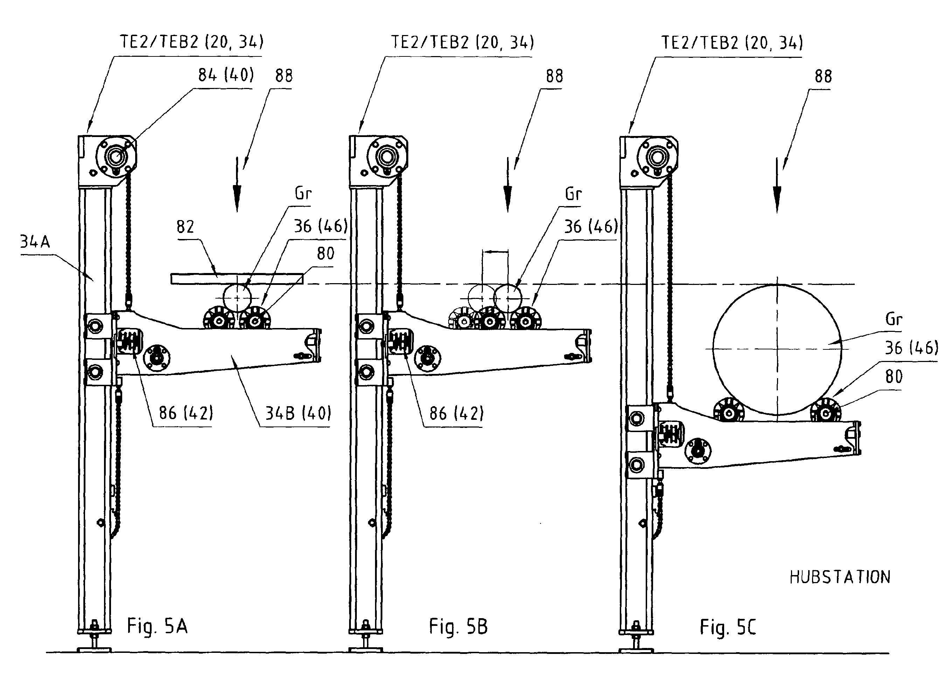

Figur 5A zeigt die Stangentransportstation 34 als Teil der Stangenbestrahlungsstrecke 20 innerhalb der zweiten Bestrahltransporteinrichtung TEB₂. Die Stangentransportstationen 34 sind von der Vorzone VZ über den Bestrahlungsraum 52 bis zur Nachzone NZ parallel zur x-Scan-Achse 88 angeordnet. Vorzugsweise befinden sich in der Vorzone VZ neun Stangentransportstationen 34, im Bestrahlungsraum 52 elf Stangentransportstationen 34 und in der Nachzone NZ wiederum neun Stangentransportstationen 34. Figur 5A zeigt, dass die Stangentransportstationen 34 ein Ständerwerk 34A und einen Haltearm 34B aufweist. Zudem sind auf dem Haltearm 34B Elemente angeordnet, die als eine Rotationsvorrichtung 36 oder als eine Translationsvorrichtung 38 dienen. Dieses Element ist vorzugsweise eine Allseitenrolle 46. Der Gegenstand Gᵣ, hier der stangen-/rohrförmige Gegenstand Gᵣ, ist auf der x-Scan-Achse 88 angeordnet und befindet sich zwischen zwei Allseitenrollen 46. Die Allseitenrollen 46 besitzen einen ersten Antrieb 80, mittels dem auf der Achse der Allseitenrolle 46 der stangen-/rohrförmige Gegenstand Gᵣ in eine Rotationsbewegung versetzbar ist. Ein zweiter Antrieb 82 mit einer andeutungsweise dargestellten Mitnehmerkette bewirkt die translatorische Bewegung des stangen-/rohrförmigen Gegenstandes Gᵣ auf der Allseitenrolle 46. Zur Vertikalverstellung dient eine vertikale Verstellvorrichtung 40, die mittels eines dritten Antriebes 84 eine vertikale Verstellung des Haltearmes 34B ermöglicht und damit eine Einstellbarkeit im Bereich der ersten und zweiten Ebene E₁, E₂ des stangen-/rohrförmigen Gegenstandes Gᵣ ermöglicht. Die Möglichkeit einer horizontalen Verstellung ist mittels einer horizontalen Verstellvorrichtung 42 sowohl in Figur 5A als auch in Figur 5B mittels eines vierten Antriebes 86 dargestellt. Der stangen-/rohrförmige Gegenstand Gᵣ kann durch diese horizontale Verstellvorrichtung 42 zur optimalen Dosisverteilung im Rohr, vorzugsweise in einem Bereich von 0 bis 300 mm aus seiner x-Scan-Achse 88 heraus verstellt werden.

Figur 5C zeigt, dass auch stangen-/rohrförmige Gegenstände Gᵣ mit großen Durchmessern auf der x-Scan-Achse 88 durch horizontale Verlagerung der Allseitenrolle 46 geführt werden können. Entsprechend der Figur 5B ist selbstverständlich auch eine aus der x-Scan-Achse 88 heraus führende horizontale Verstellung des Gegenstandes Gᵣ möglich, wobei dann die Mittellinie des Gegenstandes Gᵣ zur x-Scan-Achse 88 beabstandet angeordnet ist. In der Figur 5B und der Figur 5C ist die Mitnehmerkette zur Verwirklichung der translatorischen Bewegung in x-Richtung x mit dem zugehörigen zweiten Antrieb 82 nicht dargestellt.

Das Verfahren ermöglicht also, dass der stangen-/rohrförmige Gegenstand Gᵣ mittels der zweiten Bestrahltransporteinrichtung TEB₂ von der Vorzone VZ entlang der x-Scan-Achse 88 parallel zur x-Richtung x in die Nachzone NZ transportiert und gleichzeitig mittels der Rotationsvorrichtung 36 um seine eigene Achse rotiert und/oder vertikal mittels der vertikalen Verstellvorrichtung 40 innerhalb der ersten und der zweiten Ebene E₁, E₂ verstellt und/oder horizontal mittels der horizontalen Verstellvorrichtung 42 aus der x-Scan-Achse 88 heraus innerhalb der ersten oder zweiten Ebene E₁, E₂ verstellt wird.

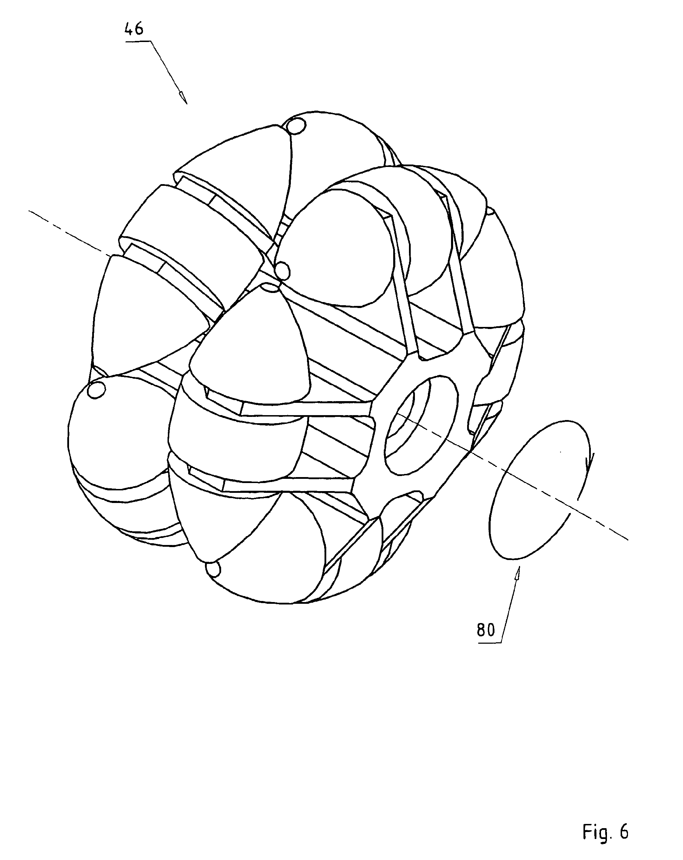

Figur 6 zeigt die Allseitenrolle 46 mit dem ersten Antrieb 80 auf einer Achse der Allseitenrolle 46, wobei der erste Antrieb 80 nur andeutungsweise dargestellt ist.

Figur 7 zeigt dass dritte Labyrinth 10C - das so genannte Horizontallabyrinth. Im dritten Labyrinth 10C ist die Transporteinrichtung TEₙ in Ausbildung einer Stückguttransporteinrichtung TE₃ dargestellt. Die Stückguttransporteinrichtung TE₃ besteht aus einer dritten Zuführungseinrichtung TEZ₃ und einer dritten Abtransporteinrichtung TA₃. Die dritte Zuführungseinrichtung TEZ₃ umfasst eine erste Fördereinrichtung 72A und die dritte Abtransporteinrichtung TEA₃ umfasst die dritte Fördereinrichtung 72C. Die dritte Bestrahltransporteinrichtung TEB₃ umfasst im Strahlenbereich 56 zwei zweite Fördereinrichtungen 72B und 72B'. Eine zweite Fördereinrichtung 72B ist unter dem ersten Scan-Horn 54A und die zweite Fördereinrichtung 72B' ist unter dem zweiten Scan-Horn 54B angeordnet. Figur 7 zeigt als Draufsicht den Bestrahlungsraum 52 und den durch die Scan-Hörner 54A, 54B ausgebildeten Strahlenbereich 56. Figur 7 verdeutlicht, dass die Stückgüter mittels der ersten Fördereinrichtung 72A zum Bestrahlungsraum 52 transportiert werden und von der dritten Bestrahltransporteinrichtung TEB₃ senkrecht zur x-Richtung x auf der y-Scan-Achse 90 mittels der zweiten Fördereinrichtung 72B, 72B' durch den Strahlenbereich 56 transportiert und mittels der dritten Fördereinrichtung 72C abtransportiert werden. Das Stückgut Gₛ ist mittels einer Wendestation 70 auf der ersten oder dritten Fördereinrichtung 72A, 72C wendbar.

Figur 7 verdeutlicht, dass sich in dem Strahlenbereich 56 die dritte Bestrahltransporteinrichtung TEB₃ für das Stückgut Gₛ mit der zweiten Bestrahltransporteinrichtung TEB₂ für die stangen-/rohrförmigen Gegenstände Gᵣ kreuzen. Dargestellt ist die Vorzone VZ, die parallel zur x-Achse bis zur Nachzone NZ durch den Bestrahlungsraum 52 führt. Diese Kreuzung der zweiten bzw. dritten Bestrahltransporteinrichtung TEB₂, TEB₃ ist nur möglich durch die Anordnung in den zugehörigen zweiten und dritten Ebenen E₂, E₃. In Figur 7 nicht dargestellt befindet sich in dem Strahlenbereich 56 noch oberhalb der zweiten und dritten Bestrahltransporteinrichtung TEB₂, TEB₃ die erste Bestrahltransporteinrichtung TEB₁ für das flexible Rohr, die ebenfalls in x-Richtung x auf der x-Scan-Achse 88 verläuft. Erfindungsgemäß sind gleichzeitig flexibles Rohr G_{fr} und stangen-/rohrförmige Gegenstände Gᵣ in der ersten und zweiten Ebene E₁, E₂ im Strahlenbereich 56 in der Elektronenbestrahlungsanlage 100 bestrahlbar. Ferner ist gleichzeitig mit dem flexiblen Rohr G_{fr} Stückgut Gₛ in der ersten und dritten Ebene E₁, E₃ im Strahlenbereich 56 in der Bestrahlungslage bestrahlbar.

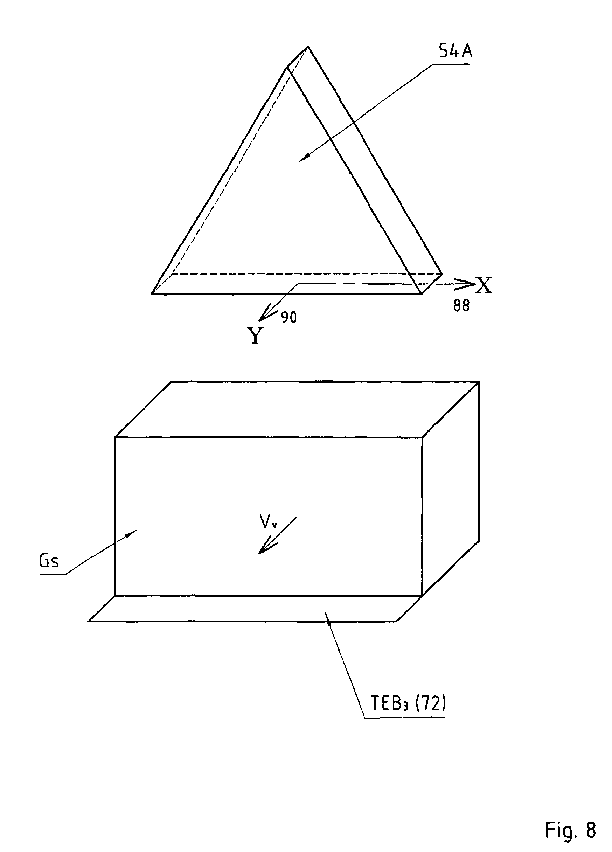

Figur 8 zeigt abschließend noch einmal das Scan-Horn 54 und ein unter dem Scan-Horn 54 angeordnetes Stückgut, welches in y-Richtung y entlang der y-Scan-Achse 90 mittels der dritten Bestrahltransporteinrichtung TEB₃, vorzugsweise der zweiten Fördereinrichtung 72B entlang transportiert wird.

Vorzugsweise sind folgende Gegenstände/Produkte mit folgenden Abmaßen bestrahlbar:
- stangen-/rohrförmige Gegenstände Gᵣ mit einem Durchmesser von vorzugsweise 63 mm bis 500 mm und einer Länge von 5 m bis 12 m und
- flexible Rohre G_{fr} mit einem Durchmesser von vorzugsweise 14 mm bis 22 mm und einer Länge von beispielsweise 10.000 m und
- flexible Rohre G_{fr} mit einem Durchmesser von vorzugsweise 32 bis 63 mm und einer Länge von beispielsweise 2.000 m und
- Stückgüter Gₛ bsp. Kartonware mit Abmessungen von beispielsweise Länge/Breite/Höhe 1.200 mm x 1.200 mm x 800 mm.

Mittels der Elektronenbestrahlungsanlage 100 können für die genannten Gegenstände Gᵣ, G_{fr}, Gₛ optimale Dosiswerte bedarfsgemäß im Bereich von 2 kGy ≤ D ≤ 200 kGy realisiert werden. Die maximale Dosisleistung beträgt dabei zirka 1,4 x 10⁸ Gy/h. Die mittlere Produktdosisleistung beträgt 10⁻² kGy/s ≤ dD/dt ≤ 40 kGy/s.

Die Dosishomogenität in verschiedenen Richtungen des Produktes wird in folgender Weise gewährleistet: in x-Richtung x durch die Strahlverteilung ± 5 %, in y-Richtung y durch die Konstanz der Transportgeschwindigkeit.

Der Abstand der stangen-/rohrförmigen Gegenstände Gᵣ wird von deren Oberfläche bis zum Strahlaustritt für alle Durchmesser der stangen-/rohrförmigen Gegenstände Gᵣ konstant eingestellt.

### Bezugszeichenliste

- 100: Elektronenbestrahlungsanlage
- 10: Labyrinth
- 10A: erstes Labyrinth
- 10B: zweites Labyrinth (Vertikallabyrinth)
- 10C: drittes Labyrinth (Horizontallabyrinth)
- 12: Eingangsspeicher
- 14: Einzelförderer (Eingang)
- 16: erste Absenkbahn
- 18: Einlegebahn
- 20: Stangenbestrahlungsstrecke
- 22: Wechselbahn
- 24: zweite Absenkbahn
- 26: Rückrollbahn
- 28: Hebebahn
- 30: Einzelförderer (Ausgang)
- 32: Ausgangsspeicher
- 34: Stangentransportstation
- 34A: Ständerwerk
- 34B: Haltearm
- 36: Rotationsvorrichtung
- 38: Translationsvorrichtung
- 40: vertikale Verstellvorrichtung
- 42: horizontale Verstellvorrichtung
- 44: Steuerung
- 46: Allseitenrolle
- 48: Strahlenaustrittsfenster
- 48A: erstes Strahlenaustrittsfenster
- 48B: zweites Strahlenaustrittsfenster
- 50: Strahlenfalle
- 52: Bestrahlungsraum
- 54: Scannereinrichtung
- 54A: erstes Scan-Horn
- 54B: zweites Scan-Horn
- 56: Strahlenbereich
- 58: Abschirmung
- 60: Entpackung
- 62: Verpackung
- 64: Eingangstor
- 66: Ausgangstor
- 68: Abtransport
- 70: Wendestation
- 72: Fördereinrichtung
- 72A: erste Fördereinrichtung
- 72B/72B': zweite Fördereinrichtung
- 72C: dritte Fördereinrichtung
- 74: Wickelaggregate
- 74A: erstes Wickelaggregat
- 74B: zweites Wickelaggregat
- 76: Führungsrolle
- 78: Umlenkrolle
- 80: erster Antrieb (Rotation)
- 82: zweiter Antrieb (Translation)
- 84: dritter Antrieb (Vertikal)
- 86: vierter Antrieb (Horizontal)
- 88: x-Scan-Achse
- 90: y-Scan-Achse
- 92: Elektronenbeschleuniger
- x: x-Richtung
- Y: y-Richtung
- VZ: Vorzone
- NZ: Nachzone
- TEₙ: Transporteinrichtungen
- TE₁: Rohrtransporteinrichtung (flexible Rohre)
- TEZ₁: erste Zuführungseinrichtung
- TEB₁: erste Bestrahltransporteinrichtung
- TEA₁: erste Abtransporteinrichtung
- TE₂: Stangen-/Rohr-Transporteinrichtung
- TEZ₂: zweite Zuführungseinrichtung
- TEB₂: zweite Bestrahltransporteinrichtung
- TEA₂: zweite Abtransporteinrichtung
- TE₃: Stückguttransporteinrichtung
- TEZ₃: dritte Zuführungseinrichtung
- TEB₃: dritte Bestrahltransporteinrichtung
- TEA₃: dritte Abtransporteinrichtung
- Eₙ: Ebenen
- E₁: erste Ebene
- E₂: zweite Ebene
- E₃: dritte Ebene
- Gₙ: Gegenstände/Produkte
- Gᵣ: stangen-/rohrförmiger Gegenstand
- Gₛ: Stückgut
- G_{fr}: flexibles Rohr

## Patentansprüche

1. Elektronenbestrahlungsanlage zum Bestrahlen mindestens eines Gegenstandes mittels energiereicher Elektronenstrahlen, die in der Elektronenbestrahlungsanlage erzeugbar sind, wobei die Strahlen aus einem Elektronenbeschleuniger in mindestens einem Strahlenbereich austreten und der mindestens eine Strahlenbereich (56) durch eine Scannereinrichtung (54) definierbar ist,
**gekennzeichnet durch**
mindestens einen Strahlenbereich (56), der beabstandet zu der Scannereinrichtung (54) in mindestens zwei Ebenen (Eₙ) ausgebildet ist, und in der je Ebene (Eₙ) mindestens eine Transporteinrichtung (TEBₙ) angeordnet ist, mittels der wahlweise ein stangen-/rohrförmiger Gegenstand (Gᵣ) und/oder weitere Gegenstände (Gₙ) in die Elektronenbestrahlungsanlage bringbar und gemeinsam oder getrennt bestrahlbar sind.

2. Elektronenbestrahlungsanlage nach Anspruch 1,
**dadurch gekennzeichnet,**
**dass** der mindestens eine Strahlenbereich (56) an mindestens einem Strahlenaustrittsfenster (48) und in den mindestens zwei von der Scannereinrichtung (54) beabstandeten Ebenen (Eₙ) in einer x-Richtung (x) durch einen Scan-Magneten und in einer y-Richtung (y) durch einen Wobbler ausbildbar ist.

3. Elektronenbestrahlungsanlage nach Anspruch 1 und 2,
**dadurch gekennzeichnet,**
**dass** der mindestens eine Strahlenbereich (56) in einer der beabstandeten Ebenen (Eₙ) durch einen Fokussierungsmagneten der Scannereinrichtung (54) in x-Richtung (x) abweichend zu dem Strahlenaustrittsfenster (48) einstellbar ist.

4. Elektronenbestrahlungsanlage nach 1 bis 3,
**dadurch gekennzeichnet,**
**dass** die Scannereinrichtung (54) mindestens ein erstes Scan-Horn (54A) mit einem ersten Strahlenaustrittsfenster (48A) und ein zweites Scan-Horn (54B) mit einem zweiten Strahlenaustrittsfenster (48B) umfasst.

5. Elektronenbestrahlungsanlage nach einem der vorhergehenden Ansprüche,
**dadurch gekennzeichnet,**
**dass** der mindestens eine stangen-/rohrförmige Gegenstand (Gᵣ) parallel zur x-Richtung (x) auf einer x-Scan-Achse (88) mittels einer Stangen-/Rohr-Transporteinrichtung (TE₂) in eine zweite Ebene (E₂) in den Strahlenbereich (56) in die Bestrahlungslage bringbar ist und dass die Stangen-/Rohr-Transporteinrichtung (TE₂) für den stangen-/rohrförmigen Gegenstand (Gᵣ) mindestens eine zweite Zuführungseinrichtung (TEZ₂) umfasst und dass die zweite Zuführungseinrichtung (TEZ₂) für den stangen-/rohrförmigen Gegenstand (Gᵣ) einen Eingangsspeicher (12), einen Eingangs-Einzelförderer (14), eine erste Absenkbahn (16) und eine Einlegebahn (18) bis zu einer Vorzone (VZ) umfasst.

6. Elektronenbestrahlungsanlage nach einem der vorhergehenden Ansprüche,
**dadurch gekennzeichnet,**
**dass** die Stangen-/Rohr-Transporteinrichtung (TE₂) für den stangen-/rohrförmigen Gegenstand (Gᵣ) mindestens eine zweite Bestrahltransporteinrichtung (TEB₂) in der zweiten Ebene (E₂) umfasst und dass die zweite Bestrahltransporteinrichtung (TEB₂) für den stangen-/rohrförmigen Gegenstand (Gᵣ) eine Stangenbestrahlungsstrecke (20) ist.

7. Elektronenbestrahlungsanlage nach einem der vorhergehenden Ansprüche,
**dadurch gekennzeichnet,**
**dass** die Stangen-/Rohr-Transporteinrichtung (TE₂) für den stangen-/rohrförmigen Gegenstand (Gᵣ) mindestens eine zweite Abtransporteinrichtung (TEA₂) aus einer Nachzone (NZ) eines Bestrahlungsraumes (52) umfasst und
**dass** die zweite Abtransporteinrichtung (TEA₂) für den stangen-/rohrförmigen Gegenstand (Gᵣ) eine Wechselbahn (22), eine zweite Absenkbahn (24), eine Rückrollbahn (26) eine Hebebahn (28), einen Ausgangs-Einzelförderer (30) und einen Ausgangsspeicher (32) umfasst.

8. Elektronenbestrahlungsanlage nach einem der vorhergehenden Ansprüche,
**dadurch gekennzeichnet,**
**dass** sich die Stangenbestrahlungsstrecke (20) zwischen Vorzone (VZ) und Nachzone (NZ) und Bestrahlungsraum (52) erstreckt und dass die Stangenbestrahlungsstrecke (20) mindestens eine Stangentransportstation (34) umfasst.

9. Elektronenbestrahlungsanlage nach einem der vorhergehenden Ansprüche,
**dadurch gekennzeichnet,**
**dass** die Stangentransportstation (34) parallel zu der x-Scan-Achse (88) mindestens eines Scan-Horns (54, 56) angeordnet ist und dass die Stangentransportstation (34) mindestens ein Ständerwerk (34A) und mindestens einen Haltearm (34B) aufweist.

10. Elektronenbestrahlungsanlage nach einem der vorhergehenden Ansprüche,
**dadurch gekennzeichnet,**
**dass** die Stangentransportstation (34) eine Rotationsvorrichtung (36) und/oder eine Translationsvorrichtung (38) aufweist.

11. Elektronenbestrahlungsanlage nach einem der vorhergehenden Ansprüche,
**dadurch gekennzeichnet,**
**dass** die Stangentransportstation (34) eine vertikale Verstellvorrichtung (40) und/oder eine horizontale Verstellvorrichtung (42)aufweist.

12. Elektronenbestrahlungsanlage nach einem der vorhergehenden Ansprüche,
**dadurch gekennzeichnet,**
**dass** die Rotationsvorrichtung (36), die Translationsvorrichtung (38) und die vertikale Verstellvorrichtung (40) mittels mindestens einer Allseitenrolle (46) ausführbar ist und dass die Rotationsvorrichtung (36) einen ersten Antrieb (80) an der Allseitenrolle (46) aufweist.

13. Elektronenbestrahlungsanlage nach einem der vorhergehenden Ansprüche,
**dadurch gekennzeichnet,**
**dass** die Translationsvorrichtung (38) einen zweiten Antrieb (82) an einer Mitnehmerkette aufweist.

14. Elektronenbestrahlungsanlage nach einem der vorhergehenden Ansprüche,
**dadurch gekennzeichnet,**
**dass** die vertikale Verstellvorrichtung (40) einen dritten Antrieb (84) an einer Kette im Ständerwerk (34A) und die horizontale Verstellvorrichtung (42) einen vierten Antrieb (84) am Haltearm (34B) aufweist.

15. Elektronenbestrahlungsanlage nach einem der vorhergehenden Ansprüche,
**dadurch gekennzeichnet,**
**dass** mindestens ein flexibles Rohr (G_{fr}) parallel zur x-Richtung (x) auf der x-Scan-Achse (88) oder senkrecht zur x-Richtung (x) in einer y-Scan-Achse (90) mittels einer Rohrtransporteinrichtung (TE₁) in eine erste Ebene (E₁) in die Bestrahlungslage bringbar ist.

16. Elektronenbestrahlungsanlage nach einem der vorhergehenden Ansprüche,
**dadurch gekennzeichnet,**
**dass** die Rohrtransporteinrichtung (TE₁) für ein flexibles Rohr (G_{fr}) mindestens eine erste Zuführungseinrichtung (TEZ₁) und mindestens eine erste Bestrahltransporteinrichtung (TEB₁) in der ersten Ebene (E₁) und mindestens eine erste Abtransporteinrichtung (TEA₁) umfasst.

17. Elektronenbestrahlungsanlage nach einem der vorhergehenden Ansprüche,
**dadurch gekennzeichnet,**
**dass** die mindestens eine erste Zuführungseinrichtung (TEZ₁) und die mindestens eine erste Abtransporteinrichtung (TEA₁) ein erstes Wickelaggregat (74A) und ein zweites Wickelaggregat (74B) umfasst.

18. Elektronenbestrahlungsanlage nach einem der vorhergehenden Ansprüche,
**dadurch gekennzeichnet,**
**dass** die mindestens eine erste Bestrahltransporteinrichtung (TEB₁) Führungsrollen (76) und Umlenkrollen (78) umfasst.

19. Elektronenbestrahlungsanlage nach einem der vorhergehenden Ansprüche,
**dadurch gekennzeichnet,**
**dass** mindestens ein Stückgut (Gₛ) senkrecht zur x-Richtung (x) in der y-Scan-Achse (90) mittels einer Stückguttransporteinrichtung (TE₃) in eine dritte Ebene (E₃) in die Bestrahlungslage bringbar ist und die Stückguttransporteinrichtung (TE₃) für ein Stückgut (Gₛ) mindestens eine dritte Zuführungseinrichtung (TEZ₃) umfasst.

20. Elektronenbestrahlungsanlage nach einem der vorhergehenden Ansprüche,
**dadurch gekennzeichnet,**
**dass** die Stückguttransporteinrichtung (TE₃) für das Stückgut (Gₛ) mindestens eine dritte Bestrahltransporteinrichtung (TEB₃) in der dritten Ebene (E₃) und mindestens eine dritte Abtransporteinrichtung (TEA₃) umfasst.

21. Elektronenbestrahlungsanlage nach einem der vorhergehenden Ansprüche,
**dadurch gekennzeichnet,**
**dass** die mindestens eine dritte Zuführungseinrichtung (TEZ₃), die mindestens eine dritte Bestrahltransporteinrichtung (TEB₃), die mindestens eine dritte Abtransporteinrichtung (TEA₃) eine Fördereinrichtung (72A, 72B, 72C) umfasst.

22. Elektronenbestrahlungsanlage nach einem der vorhergehenden Ansprüche,
**dadurch gekennzeichnet,**
**dass** die mindestens eine dritte Zuführungseinrichtung (TEZ₃) oder die mindestens eine dritte Abtransporteinrichtung (TEA₃) eine Wendestation (70) umfasst.

23. Elektronenbestrahlungsanlage nach einem der vorhergehenden Ansprüche,
**dadurch gekennzeichnet,**
**dass** jede Transporteinrichtung (TE₁, TE₂, TE₃) jeweils ein Labyrinth (10A, 10B, 10C) ausbildet.

24. Elektronenbestrahlungsanlage nach einem der vorhergehenden Ansprüche,
**dadurch gekennzeichnet,**
**dass** der mindestens eine stangen-/rohrförmige Gegenstand (Gᵣ) ein Rohr oder eine Stange ist und das Rohr oder die Stange einen Durchmesser von 10 mm bis 500 mm und eine Länge von 5.000 mm bis 12.000 mm aufweist.

25. Elektronenbestrahlungsanlage nach einem der vorhergehenden Ansprüche,
**dadurch gekennzeichnet,**
**dass** das mindestens eine flexible Rohr (G_{fr}) ein Kabel ist, wobei das Kabel einen Durchmesser von 1 mm bis 160 mm, vorzugsweise 14 mm bis 63 mm, aufweist und als Trommelware vorliegt.

26. Elektronenbestrahlungsanlage nach einem der vorhergehenden Ansprüche,
**dadurch gekennzeichnet,**
**dass** das mindestens eine Stückgut (Gₛ)eine Kartonware oder ein Bund ist und die Kartonware oder der Bund eine maximale Länge/Breite/Höhe von 1.200 mm / 1.200 mm / 800 mm, aufweist.

27. Elektronenbestrahlungsanlage nach einem der vorhergehenden Ansprüche,
**dadurch gekennzeichnet,**
**dass** der stangen-/rohrförmige Gegenstand (Gᵣ) eine Hilfswandung zur Aufnahme mehrerer dünner Rohre oder Stangen ist und die Hilfswandung eine Papphülse oder ein dünnwandiges PE-Rohr ist.

28. Verfahren zur Bestrahlung mindestens eines Gegenstandes/Produktes mittels energiereicher in einer Bestrahlungsanlage erzeugten Elektronenstrahlen, wobei die Strahlen in einem bestimmten Strahlenbereich austreten und dem Strahlenbereich mindestens ein Gegenstand/Produkt zugeführt, im Strahlenbereich bestrahlt und aus dem Strahlenbereich abgeführt wird,
**dadurch gekennzeichnet,**
**dass** mindestens ein stangen-/rohrförmiger Gegenstand (Gᵣ) und/oder weitere Gegenstände (Gₙ) in mindestens zwei Ebenen (Eₙ) der Elektronenbestrahlungsanlage zugeführt, den Ebenen (Eₙ) der Strahlenbereich (56) zugeordnet und ein stangen-/rohrförmiger Gegenstand (Gᵣ) und/oder weitere Gegenstände (Gₙ) gemeinsam oder getrennt bestrahlt werden.

29. Verfahren nach Anspruch 28,
**dadurch gekennzeichnet,**
**dass** mindestens ein stangen-/rohrförmiger Gegenstand (Gᵣ) durch ein zweites Labyrinth (10B)
a) in dem Eingangsspeicher (12) gespeichert und
b) mittels dem Eingangs-Einzelförderer (14) vereinzelt und
c) mittels der ersten Absenkbahn (16) in eine zweite Ebene (E₂) abgesenkt und
d) mittels der Einlegebahn (18) in die Vorzone (VZ) transportiert und
e) von einer zweiten Bestrahltransporteinrichtung (TEB₂) von der Vorzone (VZ) entlang der x-Scan-Achse (88) parallel zur x-Richtung (x) durch den Strahlenbereich (56) in die Nachzone (NZ) transportiert und
f) von der Nachzone (NZ) von der Wechselbahn (22) übernommen und zu der zweiten Absenkbahn (24) transportiert und
g) mittels der zweiten Absenkbahn (24) abgesenkt und
h) mittels der Rückrollbahn (26) zu der Hebebahn (28) gerollt und
i) mittels der Hebebahn (28) angehoben und
j) von dem Ausgangs-Einzelförderer (30) zu dem Ausgangsspeicher (32) transportiert und
k) in dem Ausgangsspeicher (32) gespeichert wird.

30. Verfahren nach Anspruch 29,
**dadurch gekennzeichnet,**
**dass** der mindestens eine stangen-/rohrförmige Gegenstand (Gᵣ) mittels der zweiten Bestrahltransporteinrichtung (TEB₂) von der Vorzone (VZ) entlang der x-Scan-Achse (88) parallel zur x-Richtung (x) in die Nachzone (NZ) transportiert und
e1) gleichzeitig mittels der Rotationsvorrichtung (36) um seine eigene Achse rotieren und/oder
e2) vertikal mittels der vertikalen Verstellvorrichtung (40) innerhalb einer ersten und der zweiten Ebene (E₁, E₂) verstellt und/oder
e3) horizontal mittels der horizontalen Verstellvorrichtung (42) aus der x-Scan-Achse (88) heraus, innerhalb der ersten oder zweiten Ebene (E₁, E₂), verstellt wird.

31. Verfahren nach Anspruch 28,
**dadurch gekennzeichnet,**
**dass** mindestens ein flexibles Rohr (G_{fr}) durch ein erstes Labyrinth (10A)
a) mittels des ersten Wickelaggregates (74A) abgewickelt und
b) von einer ersten Bestrahltransporteinrichtung (TEB₁) parallel zur x-Richtung (x) auf der x-Scan-Achse (88) oder senkrecht zur x-Richtung (x) in der y-Scan-Achse (90) durch den Strahlenbereich (56) mittels Umlenkungs- und Führungsrollen (76, 78) transportiert und
c) mittels des zweiten Wickelaggregates (74B) aufgewickelt wird.

32. Verfahren nach Anspruch 28,
**dadurch gekennzeichnet,**
**dass** mindestens ein Stückgut (Gₛ) durch ein drittes Labyrinth (10C)
a) mittels mindestens einer ersten Fördereinrichtung (72A) transportiert und
b) von einer dritten Bestrahltransporteinrichtung (TEB₃) senkrecht zur x-Richtung (x) auf der y-Scan-Achse (90) mittels mindestens einer zweiten Fördereinrichtung (72B/72B') durch den Strahlenbereich (56) transportiert und
c) mittels mindestens einer dritten Fördereinrichtung (72c) abtransportiert wird.

33. Verfahren nach Anspruch 32,
**dadurch gekennzeichnet,**
**dass** das mindestens ein Stückgut (Gₛ) mittels mindestens der ersten oder dritten Fördereinrichtung (72A, 72C) zu- oder abtransportiert wird und
cl) mittels der Wendestation (70) auf der ersten oder dritten Fördereinrichtung (72A, 72C) gewendet wird.

34. Verfahren nach Anspruch 28, 29, 30, 31,
**dadurch gekennzeichnet,**
**dass** gleichzeitig flexibles Rohr (G_{fr}) und stangen-/-rohrförmige Gegenstände (Gᵣ) in der ersten und zweiten Ebene (E₁, E₂) in dem Strahlenbereich (56) in der Bestrahlungslage bestrahlt wird und/oder gleichzeitig flexibles Rohr (G_{fr}) und Stückgut (Gₛ) in der ersten und dritten Ebene (E₁, E₃) in dem Strahlenbereich (56) in der Bestrahlungslage bestrahlt wird.

35. Verfahren nach Anspruch 28,
**dadurch gekennzeichnet,**
**dass** in den stangen-/rohrförmigen Gegenstand mehrere dünne Rohre oder Stangen eingebracht und gemeinsam der Bestrahlung zugeführt werden.

## Claims

1. An electron radiation plant for radiating at least one object by means of energy-rich electron beams, which can be generated in the electron radiation plant, whereby the beams from an electron accelerator emerge in at least one beam region and at least one beam region (56) can be defined by a scanner (54), **characterised by** at least one beam region (56), designed at a distance from the scanner (54) in at least two planes (Eₙ), and in each plane (Eₙ) of which at least one transporter (TEBₙ) is arranged, by means of which selectively a rod-/tube-like object (Gᵣ) and/or other objects (Gₙ) can be brought into the electron radiation plant and can be radiated jointly or separately.

2. The electron radiation plant as claimed in Claim 1, **characterised in that** at least one beam region (56) can be designed on at least one beam exit window (48) and in which at least two planes (Eₙ) remote from the scanner (54) can be configured in an x direction (x) by a scan magnet and designed in a y direction (y) by a wobbler.

3. The electron radiation plant as claimed in Claim 1 and 2, **characterised in that** at least one beam region (56) in one of the remote planes (Eₙ) can be adjusted by a focussing magnet of the scanner (54) in x direction (x) deviating from the beam exit window (48).

4. The electron radiation plant as claimed in Claims 1 to 3, **characterised in that** the scanner (54) comprises at least a first scan horn (54A) having a first beam exit window (48A) and a second scan horn (54B) having a second beam exit window (48B).

5. The electron radiation plant as claimed in any one of the foregoing claims, **characterised in that** at least one rod-/tube-like object (Gᵣ) parallel to the x direction (x) can be brought on an x scan axis (88) by means of a rod/tube transporter (TE₂) in a second plane (E₂) in the beam region (56) in the radiation plant, and **in that** the rod/tube transporter (TE₂) for the rod-/tube-like object (Gᵣ) comprises at least a second feed mechanism (TEZ₂), and **in that** the second feed mechanism (TEZ₂) for the rod-/tube-like object (Gᵣ) comprises an input memory (12), an input single conveyor (14), a first lowering path (16) and a insert path (18) including a preliminary zone (VZ).

6. The electron radiation plant as claimed in any one of the foregoing claims, **characterised in that** the rod/tube transporter (TE₂) for the rod-/tube-like object (Gᵣ) comprises at least one second radiation transporter (TEB₂) in the second plane (E₂), and **in that** the second radiation transporter (TEB₂) for the rod-/tube-like object (Gᵣ) is a rod radiation distance (20).

7. The electron radiation plant as claimed in any one of the foregoing claims, **characterised in that** the rod/tube transporter (TE₂) for the rod-/tube-like object (Gᵣ) comprises at least one second evacuation apparatus (TEA₂) from a final zone (NZ) of a radiation space (52), and **in that** the second evacuation apparatus (TEA₂) comprises the rod/tube-like object (Gᵣ) a change path (22), a second lowering path (24), a roll-back path (26), a lift path (28), an output individual conveyor (30) and output storage (32).

8. The electron radiation plant as claimed in any one of the foregoing claims, **characterised in that** the rod radiation distance (20) extends between preliminary zone (VZ) and final zone (NZ) and radiation space (52) and that the rod radiation distance (20) comprises at least one rod transport station (34).

9. The electron radiation plant as claimed in any one of the foregoing claims, **characterised in that** the rod transport station (34) is arranged parallel to the x scan axis (88) at least of a scan horn (54, 56) and that the rod transport station (34) has at least one support (34A) and at least one mounting arm (34B).

10. The electron radiation plant as claimed in any one of the foregoing claims, **characterised in that** the rod transport station (34) has a rotational device (36) and/or a translation device (38).

11. The electron radiation plant as claimed in any one of the foregoing claims, **characterised in that** the rod transport station (34) has a vertical adjusting device (40) and/or a horizontal adjusting device (42).

12. The electron radiation plant as claimed in any one of the foregoing claims, **characterised in that** the rotational device (36), the translation device (38) and the vertical adjusting device (40) can be executed by means of at least one all-side roller (46), and **in that** the rotational device (36) has a first drive (80) on the all-side roller (46).

13. The electron radiation plant as claimed in any one of the foregoing claims, **characterised in that** the translation device (38) has a second drive (82) on a drag chain.

14. The electron radiation plant as claimed in any one of the foregoing claims, **characterised in that** the vertical adjusting device (40) has a third drive (84) on a chain in the support (34A) and the horizontal adjusting device (42) has a fourth drive (84) on the mounting arm (34B).

15. The electron radiation plant as claimed in any one of the foregoing claims, **characterised in that** at least one flexible tube (G_{fr}) can be brought into a first plane (E₁) in the radiation plant, parallel to the x direction (x) on the x scan axis (88) or perpendicular to the x direction (x) in a y scan axis (90) by means of a pipe transporter (TE₁).

16. The electron radiation plant as claimed in any one of the foregoing claims, **characterised in that** the pipe transporter (TE₁) for a flexible tube (G_{fr}) comprises at least a first feed mechanism (TEZ₁) and at least a first radiation transporter (TEB₁) in the first plane (E₁) and at least a first evacuation apparatus (TEA₁).

17. The electron radiation plant as claimed in any one of the foregoing claims, **characterised in that** at least a first feed mechanism (TEZ₁) and at least a first evacuation apparatus (TEA₁) comprises a first winding apparatus (74A) and a second winding apparatus (74B).

18. The electron radiation plant as claimed in any one of the foregoing claims, **characterised in that** at least a first radiation transporter (TEB₁) comprises guide rollers (76) and deflection rollers (78).

19. The electron radiation plant as claimed in any one of the foregoing claims, **characterised in that** at least part-load (Gₛ) vertical to the x direction (x) in the y scan axis (90) in a third plane (E₃) can be introduced to the radiation plant by means of a part-load transporter (TE₃), and the part-load transporter (TE₃) for part-load (Gₛ) comprises at least a third feed mechanism (TEZ₃).

20. The electron radiation plant as claimed in any one of the foregoing claims, **characterised in that** the part-load transporter (TE₃) for the part-load (Gₛ) comprises at least a third radiation transporter (TEB₃) in the third plane (E₃) and at least a third evacuation apparatus (TEA₃).

21. The electron radiation plant as claimed in any one of the foregoing claims, **characterised in that** at least a third feed mechanism (TEZ₃), at least a third radiation transporter (TEB₃), at least a third evacuation apparatus (TEA₃) comprises a conveyor (72A, 72B, 72C).

22. The electron radiation plant as claimed in any one of the foregoing claims, **characterised in that** at least a third feed mechanism (TEZ₃) or at least a third evacuation apparatus (TEA₃) comprises a reversing station (70).

23. The electron radiation plant as claimed in any one of the foregoing claims, **characterised in that** each transporter (TE₁, TE₂, TE₃) in each case forms a labyrinth (10A, 10B, 10C).

24. The electron radiation plant as claimed in any one of the foregoing claims, **characterised in that** at least a rod-/tube-like object (Gᵣ) is a tube or a rod, and the tube or the rod has a diameter of 10 mm to 500 mm and a length of 5,000 mm to 12,000 mm.

25. The electron radiation plant as claimed in any one of the foregoing claims, **characterised in that** at least one flexible tube (G_{fr}) is a cable, whereby the cable has a diameter of 1 mm to 160 mm, preferably 14 mm to 63 mm and is present as drum goods.

26. The electron radiation plant as claimed in any one of the foregoing claims, **characterised in that** at least part-load (Gs) is cardboard material or a packet and the cardboard material or the packet has a maximum length/width/height of 1200 mm /1200 mm / 800 mm.

27. The electron radiation plant as claimed in any one of the foregoing claims, **characterised in that** the rod-/tube-like object (Gᵣ) is an auxiliary wall for accommodating a number of thin tubes or rods, and the auxiliary wall is a pasteboard tube or a thin-walled PE tube.

28. A process for radiating at least one object/product by means of energy-rich electron beams generated in a radiation plant, whereby the beams emerge in a specific beam region and at least one object/product is fed to the beam region, radiated in the beam region and transported out of the beam region, **characterised in that** at least one rod/tube-like object (Gᵣ) and/or other objects (Gₙ) in at least two planes (Eₙ) are fed to the electron radiation plant, are allocated to the planes (Eₙ) of the beam region (56) and a rod-/tube-like object (Gᵣ) and/or other objects (Gₙ) are radiated jointly or separately.

29. The process as claimed in Claim 28, **characterised in that** at least one rod-/tube-like object (Gᵣ) is stored by a second labyrinth (10B)
a) in the input memory (12), and
b) combined by means of the input individual conveyor (14) and
c) lowered by means of the first lowering path (16) in a second plane (E₂), and
d) transported by means of the insertion path (18) into the preliminary zone (VZ), and
e) transported by a second radiation transporter (TEB₂) from the preliminary zone (VZ) along the x scan axis (88) parallel to the x direction (x) by the beam region (56) in the final zone (NZ), and
f) taken from the final zone (NZ) by the change path (22) and transported to the second lowering path (24), and
g) lowered by means of the second lowering path (24), and
h) rolled by means of the roll-back path (26) to the lift path (28), and
i) lifted by means of the lift path (28), and
j) transported by the output individual conveyor (30) to the output storage (32), and
k) stored in the output storage (32).

30. The process as claimed in Claim 29,
**characterised in that** at least one rod-/tube-like object (Gᵣ) is transported by means of the second radiation transporter (TEB₂) from the preliminary zone (VZ) along the x scan axis (88) parallel to the x direction (x) into the final zone (NZ), and
e1) is rotated at the same time by means of the rotational device (36) about its own axis, and/or
e2) shifted vertically by means of the vertical adjusting device (40) inside a first and the second plane (E₁, E₂), and/or
e3) is shifted horizontally by means of the horizontal adjusting device (42) out of the x scan axis (88), inside the first or second plane (E₁, E₂).

31. The process as claimed in Claim 28, **characterised in that** at least one flexible tube (G_{fr}) is unwound, by a first labyrinth (10A)
a) by means of the first winding apparatus (74A) and
b) transported by a first radiation transporter (TEB₁) parallel to the x direction (x) on the x scan axis (88) or perpendicularly to the x direction (x) in the y scan axis (90) via the beam region (56) by means of deflection rollers and guide rollers (76, 78), and
c) is wound up by means of the second winding apparatus (74B).

32. The process as claimed in Claim 28,
**characterised in that** at least a part-load (Gₛ) is transported via a third labyrinth (10C)
a) by means of at least a first conveyor (72A), and
b) is transported by a third radiation transporter (TEB₃) perpendicularly to the x di rection (x) on the y scan axis (90) by means of at least a second conveyor (72B/72B') via the beam region (56), and
c) is transported away by means of at least a third conveyor (72c).

33. The process as claimed in Claim 32, **characterised in that** the at least part-load (Gₛ) is transported to or away by means of at least the first or third conveyor (72A, 72C), and
c1) is turned by means of the reversing station (70) on the first or third conveyor (72A, 72C).

34. The process as claimed in Claim 28, 29, 30, 31, **characterised in that** at the same time a flexible tube (G_{fr}) and rod-/tube-like objects (Gᵣ) in the first and second plane (E₁, E₂) in the beam region (56) are radiated in the radiation plant, and/or at the same time a flexible tube (G_{fr}) and part-load (Gₛ) in the first and third plane (E₁, E₃) in the beam region (56) are radiated in the radiation plant.

35. The process as claimed in Claim 28, **characterised in that** several thin tubes or rods are introduced to the rod-/tube-like object and are jointly fed to the radiating process.

## Revendications

1. Installation d'irradiation par électrons pour l'irradiation d'au moins un objet au moyen de rayons électroniques très énergétiques qui peuvent être produits dans l'installation d'irradiation par électrons, les rayons sortant d'un accélérateur d'électrons dans au moins une zone de rayons, et la zone de rayons (56), au moins au nombre de un, pouvant être définie par un équipement de scanner (54),
**caractérisée par**
au moins une zone de rayons (56) qui est constituée, à distance de l'équipement de scanner (54), dans au moins deux niveaux (Eₙ), et dans laquelle, pour chaque niveau (Eₙ), au moins un équipement de transport (TEBₙ) est disposé, au moyen duquel un objet tubulaire ou en forme de barre (Gᵣ) et/ou d'autres objets (Gₙ) peuvent être amenés dans l'installation d'irradiation par électrons et être irradiés en commun ou séparément.

2. Installation d'irradiation par électrons selon la revendication 1,
**caractérisée en ce que**
la zone de rayons (56), au moins au nombre de un, au niveau d'au moins une fenêtre de sortie de rayons (48) et dans les niveaux (Eₙ), au moins au nombre de deux, éloignés de l'équipement de scanner (54), peut être constituée, dans une direction x (x), par un aimant de balayage et, dans une direction y (y), par un wobbulateur.

3. Installation d'irradiation par électrons selon la revendication 1 et 2,
**caractérisée en ce que**
la zone de rayons (56), au moins au nombre de un, est réglable dans un des niveaux (Eₙ) éloignés par un aimant de focalisation de l'équipement de scanner (54) dans la direction x (x) en s'écartant de la fenêtre de sortie de rayons (48).

4. Installation d'irradiation par électrons selon 1 à 3,
**caractérisée en ce que**
l'équipement de scanner (54) comprend au moins un premier cornet de balayage (54A) avec une première fenêtre de sortie de rayons (48A), et un deuxième cornet de balayage (54B) avec une deuxième fenêtre de sortie de rayons (48B).

5. Installation d'irradiation par électrons selon une des revendications précédentes,
**caractérisée en ce que**
l'objet (Gᵣ) en forme de barre/tubulaire, au moins au nombre de un, peut être amené dans la position d'irradiation parallèlement à la direction x (x) sur un axe de balayage x (88), au moyen d'un équipement de transport de barres/tubes (TE₂), dans un deuxième niveau (E₂) dans la zone de rayons (56), et **en ce que** l'équipement de transport de barres/tubes (TE₂) pour l'objet (Gᵣ) en forme de barre/tubulaire comprend au moins un deuxième équipement d'amenée (TEZ₂), et **en ce que** le deuxième équipement d'amenée (TEZ₂) comprend, pour l'objet (Gᵣ) en forme de barre/tubulaire, un réservoir d'entrée (12), un convoyeur d'entrée discontinu (14), une première voie d'abaissement (16) et une voie d'insertion (18) jusqu'à une zone avancée (VZ).

6. Installation d'irradiation par électrons selon une des revendications précédentes,
**caractérisée en ce que**
l'équipement de transport de barres/tubes (TE₂) pour l'objet (Gᵣ) en forme de barre/tubulaire comprend au moins un deuxième équipement de transport d'irradiation (TEB₂) dans le deuxième niveau (E₂), et **en ce que** le deuxième équipement de transport d'irradiation (TEB₂) pour l'objet (Gᵣ) en forme de barre/tubulaire est un circuit d'irradiation de barres (20).

7. Installation d'irradiation par électrons selon une des revendications précédentes,
**caractérisée en ce que**
l'équipement de transport de barres/tubes (TE₂) pour l'objet (Gᵣ) en forme de barre/tubulaire comprend au moins un deuxième équipement d'évacuation (TEA₂) à partir d'une zone postérieure (NZ) d'une chambre d'irradiation (52), et **en ce que** le deuxième équipement d'évacuation (TEA₂) pour l'objet (Gᵣ) en forme de barre/tubulaire comprend une voie de changement (22), une deuxième voie d'abaissement (24), une voie de retour à rouleaux (26), une voie de levage (28), un convoyeur de sortie discontinu (30) et un réservoir de sortie (32).

8. Installation d'irradiation par électrons selon une des revendications précédentes,
**caractérisée en ce que**
le circuit d'irradiation de barres (20) s'étend entre la zone avancée (VZ) et la zone postérieure (NZ) et la chambre d'irradiation (52), et **en ce que** le circuit d'irradiation de barres (20) comprend au moins un poste de transport de barres (34).

9. installation d'irradiation par électrons selon une des revendications précédentes,
**caractérisée en ce que**
le poste de transport de barres (34) est disposé parallèlement à l'axe de balayage x (88) d'au moins un cornet de balayage (54, 56), et **en ce que** le poste de transport de barres (34) présente au moins un appareillage de support (34A) et au moins un bras de retenue (34B).

10. Installation d'irradiation par électrons selon une des revendications précédentes,
**caractérisée en ce que**
le poste de transport de barres (34) présente un dispositif de rotation (36) et/ou un dispositif de translation (38).

11. Installation d'irradiation par électrons selon une des revendications précédentes,
**caractérisée en ce que**
le poste de transport de barres (34) présente un dispositif de déplacement vertical (40) et/ou un dispositif de déplacement horizontal (42).

12. Installation d'irradiation par électrons selon une des revendications précédentes,
**caractérisée en ce que**
le dispositif de rotation (36), le dispositif de translation (38) et le dispositif de déplacement vertical (40) peuvent être mis en oeuvre au moyen d'au moins un rouleau omnidirectionnel (46), et **en ce que** le dispositif de rotation (36) présente un premier entraînement (80) sur le rouleau omnidirectionnel (46).

13. Installation d'irradiation par électrons selon une des revendications précédentes, **caractérisée en ce que** le dispositif de translation (38) présente un deuxième entraînement (82) sur une chaîne d'entraînement.

14. Installation d'irradiation par électrons selon une des revendications précédentes,
**caractérisée en ce que**
le dispositif de déplacement vertical (40) présente un troisième entraînement (84) sur une chaîne dans l'appareillage de support (34A), et **en ce que** le dispositif de déplacement horizontal (42) présente un quatrième entraînement (84) sur le bras de retenue (34B).

15. Installation d'irradiation par électrons selon une des revendications précédentes,
**caractérisée en ce que**
au moins un tube flexible (G_{fr}) parallèlement à la direction x (x) sur l'axe de balayage x (88), ou bien perpendiculairement à la direction x (x) dans un axe de balayage y (90), peut être amené, au moyen d'un équipement de transport de tubes (TE₁), dans un premier niveau (E₁) dans la position d'irradiation.

16. Installation d'irradiation par électrons selon une des revendications précédentes,
**caractérisée en ce que**
l'équipement de transport de tubes (TE₁) pour un tube flexible (G_{fr}) comprend au moins un premier équipement d'amenée (TEZ₁), et au moins un premier équipement de transport d'irradiation (TEB₁) dans le premier niveau (E₁), et au moins un premier équipement d'évacuation (TEA₁).

17. Installation d'irradiation par électrons selon une des revendications précédentes,
**caractérisée en ce que**
le premier équipement d'amenée (TEZ₁), au moins au nombre de un, et le premier équipement d'évacuation (TEA₁), au moins au nombre de un, comprennent un premier groupe d'enroulement (74A) et un deuxième groupe d'enroulement (74B).

18. Installation d'irradiation par électrons selon une des revendications précédentes,
**caractérisée en ce que**
le premier équipement de transport d'irradiation (TEB₁), au moins au nombre de un, comprend des rouleaux de guidage (76) et des rouleaux de renvoi (78).

19. Installation d'irradiation par électrons selon une des revendications précédentes,
**caractérisée en ce que**
le produit (Gₛ), au moins au nombre de un, peut être amené dans un troisième niveau (E₃) dans la position d'irradiation perpendiculairement à la direction x (x) dans l'axe de balayage y (90) au moyen d'un équipement de transport de produits (TE₃), et **en ce que** l'équipement de transport de produits (TE₃) pour un produit (Gₛ) comprend au moins un troisième équipement d'amenée (TEZ₃).

20. Installation d'irradiation par électrons selon une des revendications précédentes,
**caractérisée en ce que**
l'équipement de transport de produits (TE₃) pour le produit (Gₛ) comprend au moins un troisième équipement de transport d'irradiation (TEB₃) dans le troisième niveau (E₃) et au moins un troisième équipement d'évacuation (TEA₃).

21. Installation d'irradiation par électrons selon une des revendications précédentes,
**caractérisée en ce que**
le troisième équipement d'amenée (TEZ₃), au moins au nombre de un, le troisième équipement de transport d'irradiation (TEB₃), au moins au nombre de un, et le troisième équipement d'évacuation (TEA₃), au moins au nombre de un, comprennent un équipement de convoyage (72A, 72B, 72C).

22. Installation d'irradiation par électrons selon une des revendications précédentes,
**caractérisée en ce que**
le troisième équipement d'amenée (TEZ₃), au moins au nombre de un, ou le troisième équipement d'évacuation (TEA₃), au moins au nombre de un, comprend un poste de virage (70).

23. Installation d'irradiation par électrons selon une des revendications précédentes,
**caractérisée en ce que**
chaque équipement de transport (TE₁, TE₂, TE₃) constitue respectivement un labyrinthe (10A, 10B, 10C).

24. Installation d'irradiation par électrons selon une des revendications précédentes, **caractérisée en ce que** l'objet (Gᵣ) en forme de barre/tubulaire, au moins au nombre de un, est un tube ou une barre, et **en ce que** le tube ou la barre présente un diamètre de 10 mm à 500 mm et une longueur de 5 000 mm à 12 000 mm.

25. Installation d'irradiation par électrons selon une des revendications précédentes,
**caractérisée en ce que**
le tube flexible (G_{fr}), au moins au nombre de un, est un câble, le câble présentant un diamètre de 1 mm à 160 mm, de préférence de 14 mm à 63 mm, et se présente sous forme de produit sur tambour.

26. Installation d'irradiation par électrons selon une des revendications précédentes,
**caractérisée en ce que**
le produit (Gₛ), au moins au nombre de un, est un produit en carton, ou est une botte, et **en ce que** le produit en carton ou la botte présente une longueur/largeur/hauteur maximale de 1 200 mm / 1 200 mm /800 mm.

27. Installation d'irradiation par électrons selon une des revendications précédentes,
**caractérisée en ce que**
l'objet (Gᵣ) en forme de barre/tubulaire est une paroi auxiliaire pour loger plusieurs tubes ou barres minces, et **en ce que** la paroi auxiliaire est une enveloppe en carton ou un tube PE à paroi mince.

28. Procédé d'irradiation d'au moins un objet/produit au moyen de rayons électroniques très énergétiques produits dans une installation d'irradiation, les rayons sortant dans une zone de rayons définie, et au moins un objet/produit étant conduit à la zone de rayons, irradié dans la zone de rayons et évacué de la zone de rayons,
**caractérisé en ce que**
au moins un objet (Gᵣ) en forme de barre/tubulaire et/ou d'autres objets (Gₙ) sont conduits dans au moins deux niveaux (Eₙ) de l'installation d'irradiation par électrons, la zone de rayons (56) est affectée aux zones (Eₙ) et un objet (Gᵣ) en forme de barre/tubulaire et/ou d'autres objets (Gₙ) sont irradiés en commun ou séparément.

29. Procédé selon la revendication 28,
**caractérisé en ce que**
au moins un objet (Gᵣ) en forme de barre/tubulaire est, à travers un deuxième labyrinthe (10B),
a) stocké dans le réservoir d'entrée (12) et,
b) individualisé au moyen du convoyeur d'entrée discontinu (14) et,
c) au moyen de la première voie d'abaissement (16), abaissé dans un deuxième niveau (E₂) et,
d) au moyen de la voie d'insertion (18), transporté dans la zone avancée (VZ) et
e) transporté par un deuxième équipement de transport d'irradiation (TEB₂) dans la zone postérieure (NZ) depuis la zone avancée (VZ) le long de l'axe de balayage x (88) parallèlement à la direction x (x) à travers la zone de rayons (56) et
f) pris en charge à partir de la zone postérieure (NZ) par la voie de changement (22) et transporté vers la deuxième voie d'abaissement (24) et
g) abaissé au moyen de la deuxième voie d'abaissement (24) et
h) roulé au moyen de la voie de retour à rouleaux (26) vers la voie de levage (28) et
i) soulevé au moyen de la voie de levage (28) et
j) transporté depuis le convoyeur de sortie discontinu (30) vers le réservoir de sortie (32) et
k) stocké dans le réservoir de sortie (32).

30. Procédé selon la revendication 29,
**caractérisé en ce que**
l'objet (Gᵣ) en forme de barre/tubulaire, au moins au nombre de un, est transporté au moyen du deuxième équipement de transport d'irradiation (TEB₂) dans la zone postérieure (NZ) depuis la zone avancée (VZ) le long de l'axe de balayage x (88) parallèlement à la direction x (x) et
e1)mis en rotation simultanément autour de son propre axe au moyen du dispositif de rotation (36) et/ou
e2)déplacé verticalement au moyen du dispositif de déplacement vertical (40) à l'intérieur d'un premier et deuxième niveau (E₁, E₂) et/ou
e3)déplacé horizontalement hors de l'axe de balayage x (88) au moyen du dispositif de déplacement horizontal (42) à l'intérieur du premier ou deuxième niveau (E₁, E₂).

31. Procédé selon la revendication 28,
**caractérisé en ce que**
au moins un tube flexible (G_{fr}), à travers un premier labyrinthe (10A),
a) est déroulé au moyen du premier groupe d'enroulement (74A) et
b) est transporté par un premier équipement de transport d'irradiation (TEB₁) parallèlement à la direction x (x) sur l'axe de balayage x (88) ou perpendiculairement à la direction x (x) dans l'axe de balayage y (90) à travers la zone de rayons (56) au moyen de rouleaux de renvoi et de guidage (76, 78) et
c) enroulé au moyen du deuxième groupe d'enroulement (74B).

32. Procédé selon la revendication 28,
**caractérisé en ce que**
au moins, un produit (Gₛ), à travers un troisième labyrinthe (10C),
a) est transporté au moyen d'au moins un premier équipement de convoyage (72A) et
b) transporté par un troisième équipement de transport d'irradiation (TEB₃) perpendiculairement à la direction x (x) sur l'axe de balayage y (90) au moyen d'au moins un deuxième équipement de convoyage (72B/72B') à travers la zone de rayons (56) et
c) évacué au moyen d'au moins un troisième équipement de convoyage (72c).

33. Procédé selon la revendication 32,
**caractérisé en ce que**
le produit (Gₛ), au moins au nombre de un, est introduit ou évacué au moyen d'au moins le premier ou troisième équipement de convoyage (72A, 72C) et
c1)est amené à virer au moyen du poste de virage (70) sur le premier ou troisième équipement de convoyage (72A, 72C).

34. Procédé selon la revendication 28, 29, 30, 31,
**caractérisé en ce que**,
simultanément, le tube flexible (G_{fr}) et les objets (Gᵣ) en forme de barre/tubulaires sont irradiés dans la position d'irradiation dans le premier et le deuxième niveau (E₁, E₂) dans la zone de rayons (56), et/ou simultanément le tube flexible (G_{fr}) et le produit (Gₛ) sont irradiés dans la position d'irradiation dans le premier et le troisième niveau (E₁, E₃) dans la zone de rayons (56).

35. Procédé selon la revendication 28,
**caractérisé en ce que**
plusieurs tubes ou barres minces sont mis en place dans l'objet en forme de barre/tubulaire et sont conduits en commun à l'irradiation.
